# EUROPEAN PATENT SPECIFICATION

(11) **EP 3 000 713 B1**
(45) Date of publication and mention of the grant of the patent: **06.06.2018**
(21) Application number: 15757737.0
(22) Date of filing: 05.03.2015
(51) Int. Cl.: B63B 25/08, B65D 90/52

(54) **SYSTEM FOR CONTROLLING IMPACT LOAD RESULTING FROM FLUID UNDER INTERNAL/EXTERNAL FORCE IN SPECIFIC ENVIRONMENT**
SYSTEM ZUR STEUERUNG EINER STOSSBELASTUNG ALS ERGEBNIS EINER FLÜSSIGKEIT UNTER INNERER/ÄUSSERER KRAFT IN EINER SPEZIFISCHEN UMGEBUNG
SYSTÈME DE COMMANDE DE CHARGE D'IMPACT RÉSULTANT D'UN FLUIDE SOUS L'ACTION D'UNE FORCE INTERNE/EXTERNE DANS UN ENVIRONNEMENT SPÉCIFIQUE

(30) Priority: 05.03.2014 KR 20140026086
(43) Date of publication of application: 30.03.2016
(73) Proprietor: Cytroniq Co., Ltd., Cheonan-si, Chungcheongnam-do 331-200 (KR)
(72) Inventor: LEE, Michael MyungSub, Seoul 156-824 (KR)
(74) Representative: Zardi, Marco
(86) International application number: PCT/KR2015/002148
(87) International publication number: WO 2015/133844

(56) References cited:
- WO-A2-2012/070933
- JP-A- 2008 213 886
- KR-A- 20130 072 756
- KR-A- 20130 077 545
- KR-A- 20130 077 545
- KR-B1- 101 010 989
- KR-B1- 101 162 469
- KR-B1- 101 162 469
- KR-B1- 101 304 905
- KR-U- 20130 001 960

## Description

### Technical field

The present invention relates to a system for controlling an impact load resulting from a fluid under an internal/external force in a specific environment interworking with environmental external monitoring. More specifically, the present invention relates to a system for controlling an impact load resulting from a fluid under an internal/external force in a specific environment applicable to fluid existing in the river, lake, sea and transportation devices, etc., which can minimize impact load of a fluid under internal/external force including sloshing, slamming, and ice collision, in consideration of the environmental external force and movement of maritime structure or transportation devices.

### Background art

In general, in order to transport fluid cargos, various forms of vessels are manufactured.

For example, in order to transport fluid or fuel such as LNG, LPG, hydrate, crude oil, etc., transportation devices are manufactured reflecting the characteristic of each transportation material and effect of internal/external force in the environment. In this regard, transportation devices or fuel windows of a particular shape are applied so as to seal or keep the transportation material at extremely low temperature, low temperature or high temperature, etc. in the transportation device.

When manufacturing such transportation device or fuel window, one of the important load conditions is sloshing.

Here, sloshing means a behavior of the fluid causing strong impact to an inner wall of a transportation device while radically shaking the fluid having a free surface by continuously receiving kinetic energy due to the movement of transportation devices such as a hull. The sloshing problem needs to be considered from an initial stage of manufacturing a maritime structure or transportation device.

Thus, the maritime structure or transportation device is designed to minimize the sloshing by a fluid while sufficiently standing the expected sloshing load.

Also, during this process, in order to avoid sloshing load which is difficult to stand structurally, ship owners had to accept conditional shipping conditions limiting the cargo load.

Nevertheless, due to the uncertainty of the sloshing load, there are many problems relating to damage on unexpected cargo holds.

In order to solve the above, Korean Patent No. 1043622 discloses a device for inhibiting sloshing including a plurality of buoyant bodies floating on the surface of liquid cargo. Another example can be found in the patent KR101162469. However, since the conventional technologies cannot block sloshing occurring inside liquid cargo, the sloshing load occurring on the surface of the liquid cargo is very irregular, and the sloshing load is too big, and thus there is a limitation in blocking sloshing.

Thus, a system for controlling an impact load resulting from a fluid under an internal/external force in a specific environment applicable to fluid existing in the river, sea or transportation means, which can minimize the impact load resulting from a fluid under an internal/external force including sloshing, slamming, or ice collision, in consideration of the effect of internal/external force in a specific environment such as inside a transportation device or natural environment, is required.

KR 101162469 B1 discloses a measuring apparatus for a sloshing phenomenon inside a cargo tank comprises a floating mat coupling body and optical acceleration measuring sensors, wherein the floating mat coupling body comprises multiple floating mat unit bodies and is formed into a shape of a plate according to couple multiple floating mat units. JP 2008 213886 A discloses system for lessening swinging of a floating roof comprising a tank body that stores a liquid; a floating roof floated for arrangement on the liquid level within the tank body; and a sloshing restraining device, as is installed on the floating roof, which suppresses the sloshing of the liquid.

### Summary of invention

The task of an embodiment of the prevent invention is to provide a system for controlling an impact load resulting from a fluid under an internal/external force in a specific environment, which can efficiently attenuate impact load including sloshing, slamming, and ice collision against fluid under an internal/external force while detecting impact fluid including sloshing, slamming, and ice collision against fluid under an internal/external force in a specific environment such as natural environments such as river, lake, sea, etc. or sealed transportation means such as a container, fuel tank, etc.

Another task of the present invention is to provide a system for controlling an impact load resulting from a fluid under an internal/external force in a specific environment, which allows a simple and quick process of the work of connecting a plurality of mat members and maintenance thereof through a detachable member fixed to the cover of the mat member.

The system for controlling an impact load resulting from a fluid under an internal/external force in a specific environment according to an embodiment of the present invention includes a floating means 300 arranged horizontally inside a predetermined amount of fluid 200 existing in an open space or in a space having a sealed interior; a position adjustment means 400 vertically connected to the floating means 300 and arranged in a preset position inside the fluid; a sensing means 500 selectively installed inside the fluid 200, on the floating means 300, on the position adjustment means 400, or on a structure positioned in the periphery to sense a physical change of at least one preset measurement object; and a control means 600 for predicting/monitoring and predicting/controlling fluid dynamics-related environment internal/external forces, hull stress, six-degree-of-freedom movements, and positions in connection with a transportation means 100 or a maritime structure, on which the floating means 300, the position adjustment means 400, and the sensing means 500 are installed, using the physical change value related to the measurement object transmitted from the sensing means 500.

According to a system for controlling an impact load resulting from a fluid under an internal/external force in a specific environment according to the present invention, the impact load and boil off gas (BOG) of the fluid can be minimized while efficiently sensing the impact load of various fluids including sloshing, slamming, ice collision, etc. by arranging the mat member inside the fluid varying the specific gravity of the floating body installed vertical to the mat member.

Also, the present invention can allow a simple and quick process of the work of connecting a plurality of mat members and maintenance thereof through a detachable member fixed to the cover of a mat member, and thus has an effect of improving the convenience in workability as compared to the conventional method which fixed the mat member using a wire or rope.

### Brief description of drawings

Figs. 1a to 1c are cross-sectional views illustrating a condition applying the system for controlling an impact load resulting from fluid under internal/external force in a specific environment according to the present invention to natural environment such as rivers, lakes, and sea;
Figs. 2a to 2c are cross-sectional views illustrating a condition applying the system for controlling an impact load resulting from fluid under internal/external force in a specific environment according to the present invention to a transportation means such as a container or a fuel window;
Figs. 3a to 3c are cross-sectional views illustrating a position adjustment means applied to the system for controlling an impact load resulting from fluid under internal/external force in a specific environment according to the present invention;
Figs. 4 to 7 are plan views illustrating an arrangement of a floating means applied to the system for controlling an impact load resulting from fluid under internal/external force in a specific environment not part of the present invention;
Figs. 8 to 12 are perspective views and cross-sectional views illustrating a mat member of a floating means applied to the system for controlling an impact load resulting from fluid under internal/external force in a specific environment not part of the present invention;
Figs. 13a and 13b are cross-sectional views illustrating that a position adjustment means applied to the system for controlling an impact load resulting from fluid under internal/external force in a specific environment according to the present invention is formed in various sizes;
Figs. 14a and 14b are cross-sectional views illustrating intervals between the position adjustment means applied to the system for controlling an impact load resulting from fluid under internal/external force in a specific environment according to the present invention;
Figs. 15a and 15b are cross-sectional views illustrating a contact condition of position adjustment means applied to the system for controlling an impact load resulting from fluid under internal/external force in a specific environment according to the present invention;
Figs. 16a to 16d are cross-sectional views illustrating an inner structure of a position adjustment means applied to the system for controlling an impact load resulting from fluid under internal/external force in a specific environment according to the present invention;
Figs. 16e, 16f, 17a to 17d are perspective views illustrating a position adjustment means applied to the system for controlling an impact load resulting from fluid under internal/external force in a specific environment not part of the present invention;
Figs. 18a to 18c are perspective views illustrating a condition of the connection between a position adjustment means having a curtain shape and a floating means applied to the system for controlling an impact load resulting from fluid under internal/external force in a specific environment according to the present invention;
Figs. 19a and 19b are cross-sectional views illustrating an arrangement of a sensor sensing a movement of impact load of fluid applied to the system for controlling an impact load resulting from fluid under internal/external force in a specific environment according the present invention;
Figs. 20a and 20b are cross-sectional views illustrating a condition having a bumper plate installed in an inner wall of a transportation means when the system for controlling an impact load resulting from fluid under internal/external force in a specific environment according to a preferable embodiment of the present invention is installed in a transportation means;
Figs. 21a and 21b are side cross-sectional views illustrating a thickness of a bumper plate installed in an inner wall of a transportation means when the system for controlling an impact load resulting from fluid under internal/external force in a specific environment according to a preferable embodiment of the present invention is installed in a transportation means;
Fig. 22 is a block diagram of a control means 600 applied to the system for controlling an impact load resulting from fluid under internal/external force in a specific environment according to a preferable embodiment of the present invention;
Fig. 23 is a control flow chart for explaining a control operation of the system for controlling an impact load resulting from fluid under internal/external force in a specific environment according to a preferable embodiment of the present invention; and
Figs. 24a and 24e are graphs illustrating measurement data sensed at a sensing means of the system for controlling an impact load resulting from fluid under internal/external force in a specific environment according to a preferable embodiment of the present invention.

### Best mode for carrying out the invention

Hereinafter, the present invention will be described in detail with reference to the drawings.

In the following description, usage of suffixes such as "module" and "part" used for referring to elements is given merely to facilitate explanation of the present invention, and the "module" and "part" may be used interchangeably.

Further, hereinafter, exemplary embodiments of the present invention are described with reference to the accompanying drawings and contents disclosed therein, however, the present invention is not limited thereto or restricted thereby.

The terms used in this specification were selected to include current, widely-used, general terms, in consideration of the functions of the present invention. However, the terms may represent different meanings according to the intentions of the skilled person in the art or according to customary usage, the appearance of new technology, etc. In certain cases, a term may be one that was arbitrarily established by the applicant. In such cases, the meaning of the term will be defined in the relevant portion of the detailed description. As such, the terms used in the specification are not to be defined simply by the name of the terms but are to be defined based on the meanings of the terms as well as the overall description of the present invention.

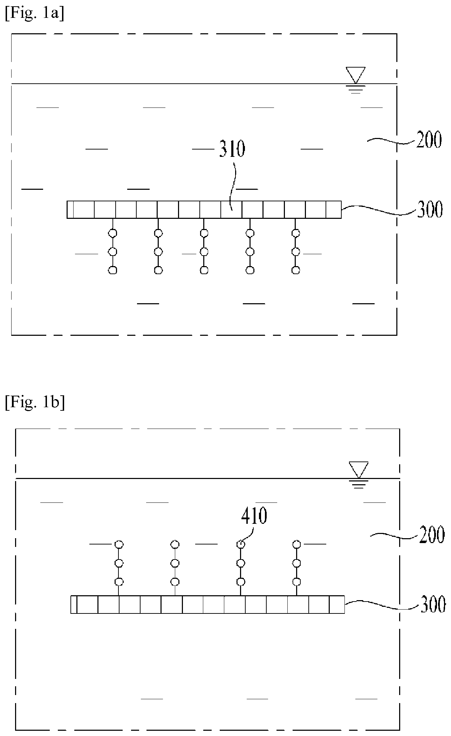

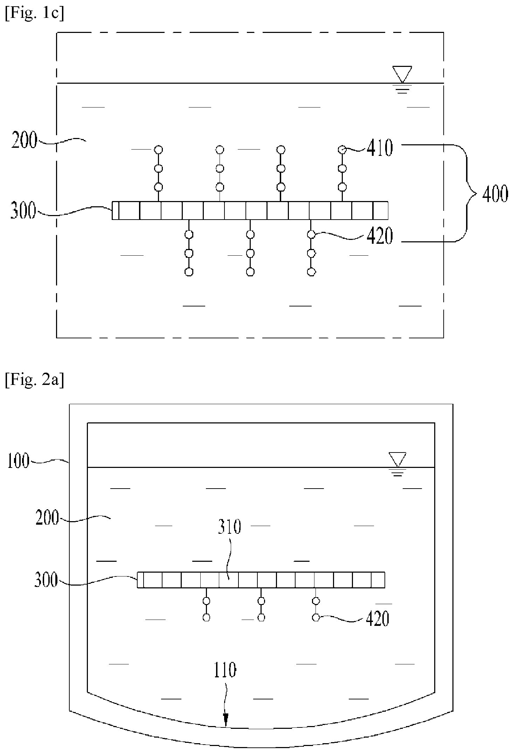

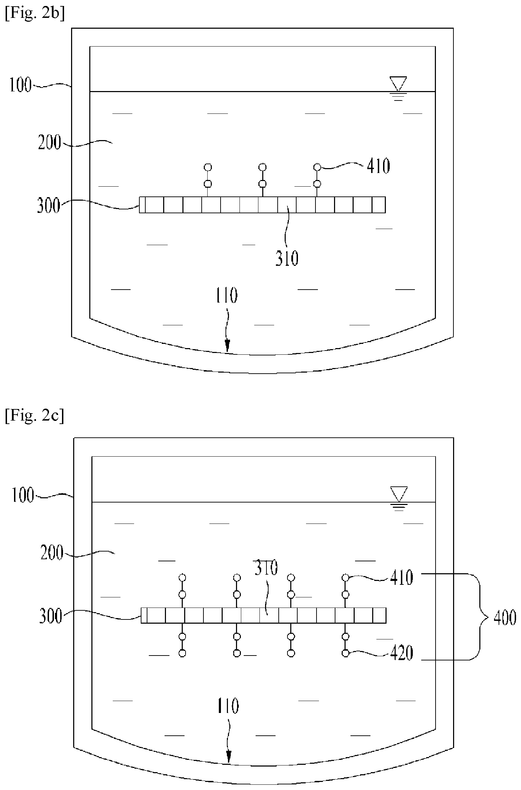

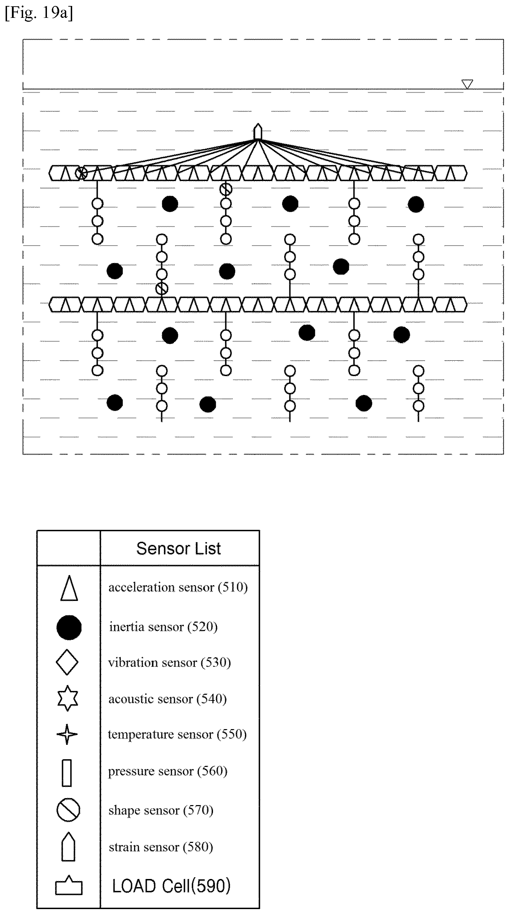

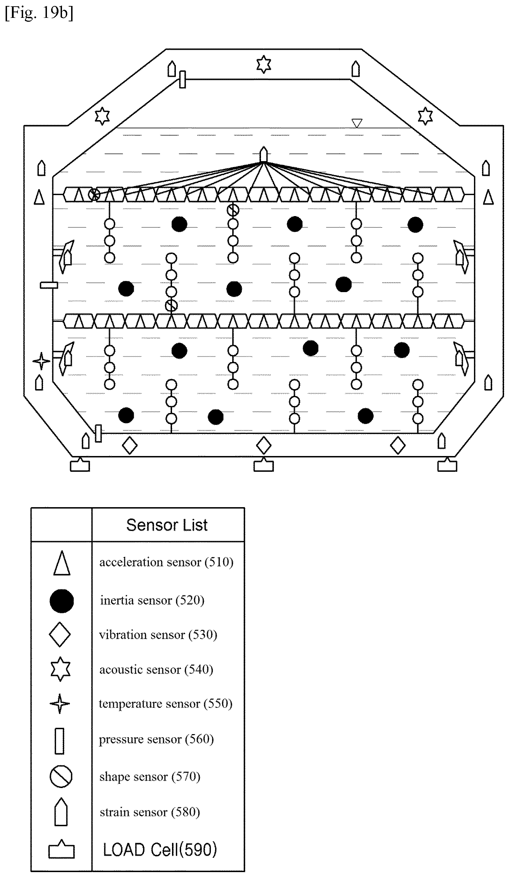

Figs. 1a to 1c are cross-sectional views illustrating a condition applying a system for controlling an impact load resulting from fluid under internal/external force in a specific environment according to the present invention to natural environment such as rivers, lakes, and sea. Figs. 2a to 2c are cross-sectional views illustrating a condition applying a system for controlling an impact load resulting from fluid under internal/external force in a specific environment according to the present invention to a transportation means such as a container or a fuel window. Figs. 19a and 19b are cross-sectional views illustrating an arrangement of a sensor sensing a movement of impact load of fluid applied to the system for controlling an impact load resulting from fluid under internal/external force in a specific environment according to the present invention.

As shown in Figs. 1a to 1c, 2a to 2c, and 19a and 19b, the system for controlling an impact load resulting from fluid under internal/external force in a specific environment includes a floating means 300 arranged horizontally inside a predetermined amount of fluid 200 existing in an open space or in a space having a sealed interior; a position adjustment means 400 vertically connected to the floating means 300 and arranged in a preset position inside the fluid; and a sensing means 500 selectively installed inside the fluid 200, on the floating means 300, on the position adjustment means 400, or on a structure positioned in the periphery to sense a physical change of at least one preset measurement object.

The system for sensing an impact load may be applied to a liquefied natural gas carrier (LNGC), a floating-LNG (F-LNG), a floating storage regasification unit (FSRU), an LNG fueled vessel (LNGFV), an LNG bunkering vessel (LNGBV), an LNG bunkering terminal (LNGBT), etc.

Also, the fluid 200 in a preferable embodiment of the present invention means a condition where raw materials in gas state, liquid state and ice state are mixed in an unspecified form. This may apply in the same manner to all cases where the fluid is in gas state and liquid state, or where fluid ice including gas or other particles is mixed.

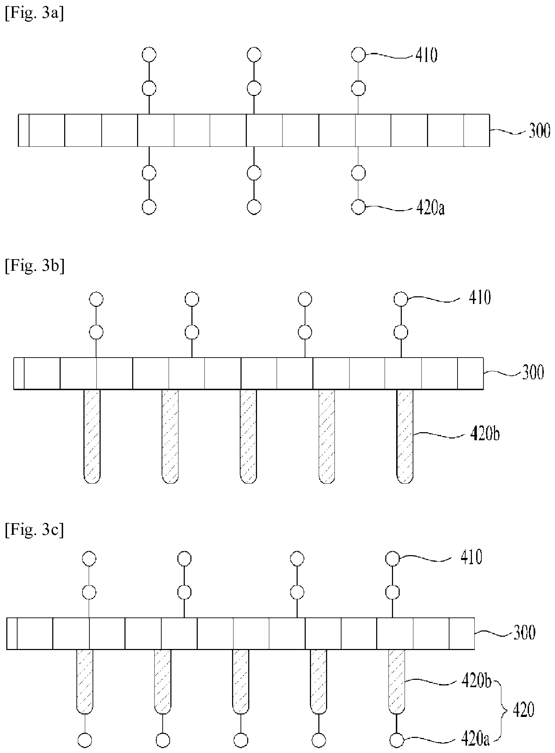

Figs. 3a to 3c are cross-sectional views illustrating a position adjustment means applied to the system for controlling an impact load resulting from fluid under internal/external force in a specific environment according to the present invention.

Referring to Figs. 3a to 3c, the position adjustment means 400 includes at least one of a first floating body 410 arranged at an upper part of the floating means 300 and a second floating body 420 arranged at a lower part of the floating means 300.

In this case, the first floating body 410 of the position adjustment means 400 is formed to have a specific gravity smaller than the fluid 200 and the floating means 300, thus having the highest buoyancy, the second floating body 420 of the position adjustment means 400 is formed to have a specific gravity greater than the fluid 200 and the floating means 300, thus having the smallest buoyancy, and the floating means 300 is formed to have a specific gravity greater than the fluid 200 and the first floating body 410 and smaller than the second floating body 420, thus having a buoyancy therebetween.

As shown in Fig. 3a, the first floating body 410 and the second floating body 420 of the position adjustment means 400 are formed of a floating member 420a formed of a phenol resin, a melamine resin, and a synthetic resin thereof, and the first floating body 410 is formed to have a specific gravity smaller than the second floating body 420.

Also, the floating member 420a may be formed of a plurality of minute holes in the external surface, or formed of an uneven pattern on the side surface in some cases.

In some cases, as shown in Fig. 3b, the first floating body 410 of the position adjustment means 400 may be formed of a floating member having a buoyant body, and the second floating body 420 of the position adjustment means 400 may be formed of a curtain member 420b having a curtain shape formed of a phenol resin, a melamine resin, and a synthetic resin thereof.

Here, the curtain member 420b may be formed of one single member arranged to surround along a side circumference of the floating means 300, and in some cases, the curtain member 420b may be formed of a plurality of members arranged to surround along a side circumference of the floating means 300.

Here, when there are a plurality of curtain members 420b, adjacent curtain members may be arranged at predetermined intervals.

Also, a surface of the curtain member 420b may be formed of a plurality of holes where the fluid may float around.

Also, the curtain member 420b may be fixed or locked to the floating means 300 using at least one of an adhesive 310 and a locking member.

Alternatively, as shown in Fig. 3c, the first floating body 410 of the position adjustment means 400 may be a floating member having a buoyant body, and the second floating body 420 of the position adjustment means 400 may include both a curtain member 420b having a curtain shape and a floating member 420a having buoyancy.

That is, the second floating body 420 of the position adjustment means 400 may be configured to have a floating member 420a locked at an end of the curtain member 420b having a curtain shape.

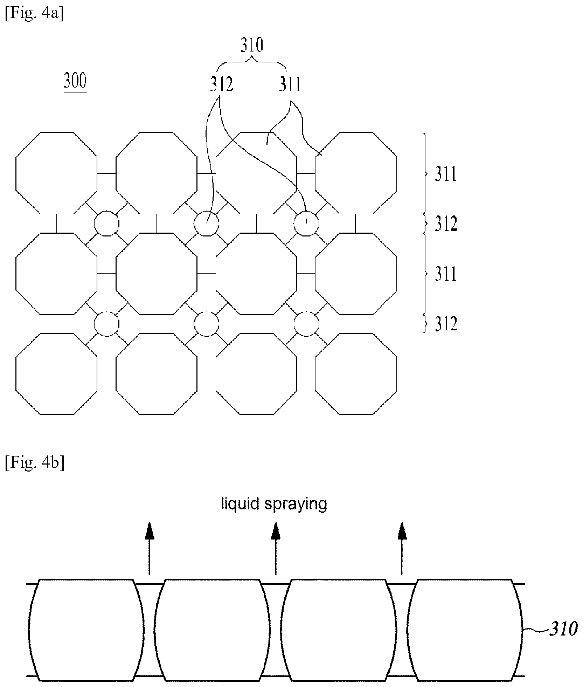

Figs. 4 to 7 are plan views illustrating an arrangement of a floating means applied to the system for controlling an impact load resulting from fluid under internal/external force in a specific environment not part of the present invention.

Referring to Figs. 4 to 7, the floating means 300 is formed of a plurality of mat members 310 connected to one another using a wire or rope, and mat members 310 having a function of a buoyant body are arranged at predetermined intervals to have a predetermined empty space. Thus, when liquid in the fluid 200 and the mat member 310 are sprayed between mat members 310 by inertial motion during movement, evaporated fluid in an upper part of the mat member 310 is re-collected in liquid state. In this case, in order to increase the re-collection rate of liquid included in the fluid 200, preferably, a plurality of minute holes or an uneven pattern is formed in the upper external surface and the side surface of the mat member 310.

Here, the mat member 310 may be formed using specific materials such as a phenol resin, a melamine resin, and a synthetic resin thereof.

As such, as shown in Fig. 4, the floating means 300 formed of a plurality of mat members 310 connected to one another may include a first mat member 311 arranged in an odd number of columns and a second mat member 312 arranged in an even number of columns. In this regard, the first mat member 311 and the second mat member 312 are arranged crisscross each other.

Here, the first mat member 311 and the second mat member 312 may be formed in different shapes or in the same shape.

In some cases, adjacent first mat members 311 may be formed in different shapes or in the same shape, and adjacent second mat members 312 may be formed in different shapes or in the same shape.

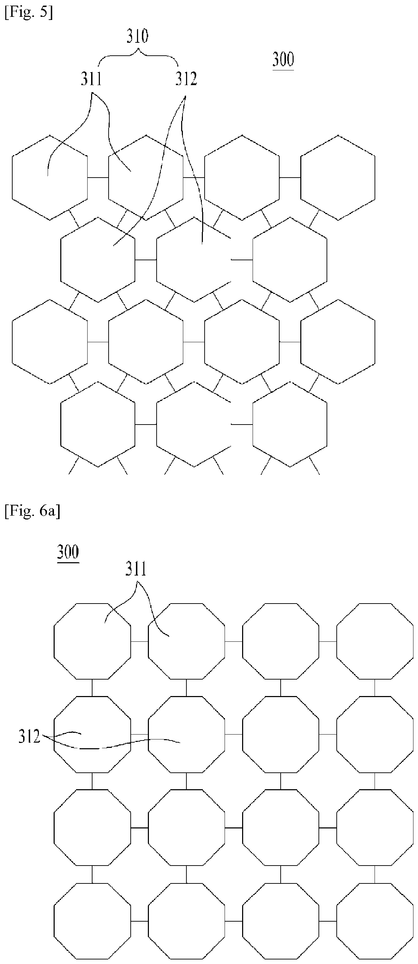

For example, as shown in Fig. 5, the floating means 300 may include a first mat member 311 arranged in an odd number of columns and a second mat member 312 arranged in an even number of columns. In this regard, the first mat member 311 and the second mat member 312 are arranged crisscross each other.

Here, the first mat member 311 and the second mat member 312 may have the same shape.

As another example, as shown in Fig. 6a, the floating means 300 may include a first mat member 311 arranged in an odd number of columns and a second mat member 312 arranged in an even number of columns. In this regard, the first mat member 311 and the second mat member 312 are arranged crisscross each other.

Here, the first mat member 311 and the second mat member 312 may have different shapes.

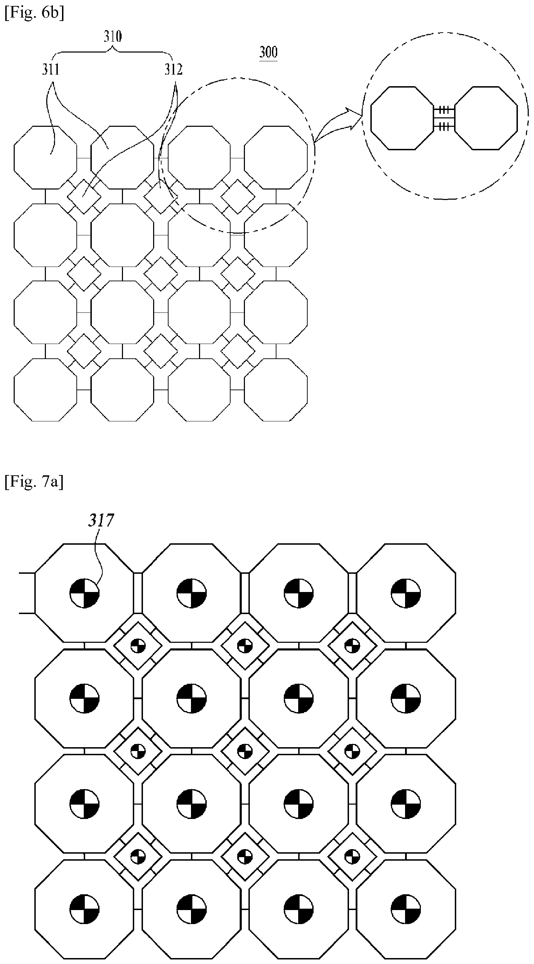

As another example, as shown in Fig. 6b, the floating means 300 may include a first mat member 311 arranged in an odd number of columns and a second mat member 312 arranged in an even number of columns, and a first mat member 311 and a second mat member 312 may be arranged parallel to each other to form a lattice structure. In this case, the first mat member 311 and the second mat member 312 may have the same shape.

As shown in Fig. 6a, it is possible to apply a strain sensor measuring the shape or the extension or contraction of at least one axis when a 3-axis acceleration sensor is installed inside the mat member 310.

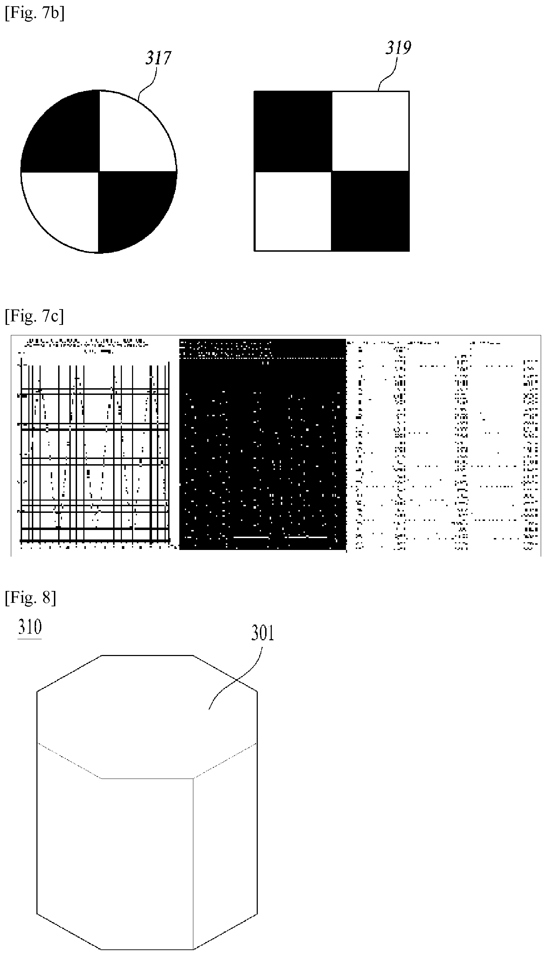

Here, as shown in Figs. 7a to 7c, identification marks 317 and 319 capable of identifying an image or laser are formed or attached to an upper surface of each mat member 310, so as to allow the control means 600 to measure and diagnose the position and six-degree-of-freedom movement of each mat member 310, thereby enabling optimized measurement and control of the impact load not part of the present invention.

Here, as shown in Fig. 7b, preferably, the identification marks 317 and 319 use circular or quadrangular identification marks indicating quadrants, so as to distinguish rotating angles.

Figs. 8 to 12 are perspective views and cross-sectional views illustrating a mat member of a floating means applied to the system for controlling an impact load resulting from fluid under internal/external force in a specific environment not part of the present invention.

Referring to Figs. 8 to 12, the floating means 300 is formed of a plurality of mat members 310 connected to one another, and the mat members 310 are arranged at predetermined intervals to have a predetermined empty space.

As shown in Fig. 8, each mat member 310 of the floating means 300 may be formed only of a body part 301 playing the role of a buoyant body.

Here, the body part 301 may be made of a material having a predetermined specific gravity, and for example, aluminum or aluminum alloy may be used.

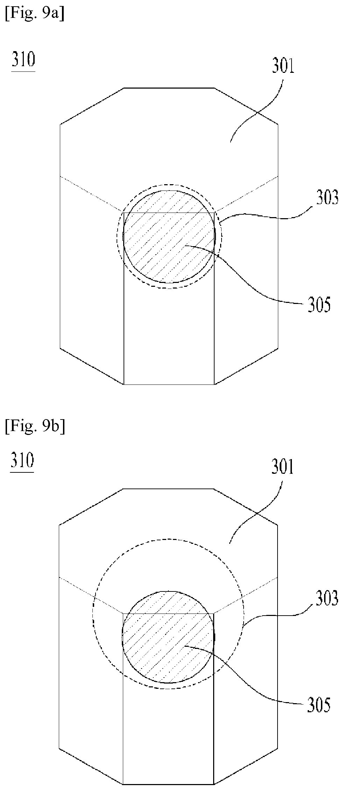

Next, as shown in Figs. 9a and 9b, each mat member 310 of the floating means 300 includes a body part 301 having a closed space 303 in the center of an inner portion, and a buoyant body 305 arranged in the closed space 303 of the body part 301.

Here, as shown in Fig. 9a, the buoyant body 305 may take up an entire area of the closed space 303, and in some cases, as shown in Fig. 9b, the buoyant body 305 may take up only a part of the area of the closed space 303 and leave a space for controlling the position so that the floating means 100 may float at a predetermined depth.

In this case, the body part 301 may be formed using a foam member, and the buoyant body 305 may use aluminum or aluminum alloy having a predetermined specific gravity.

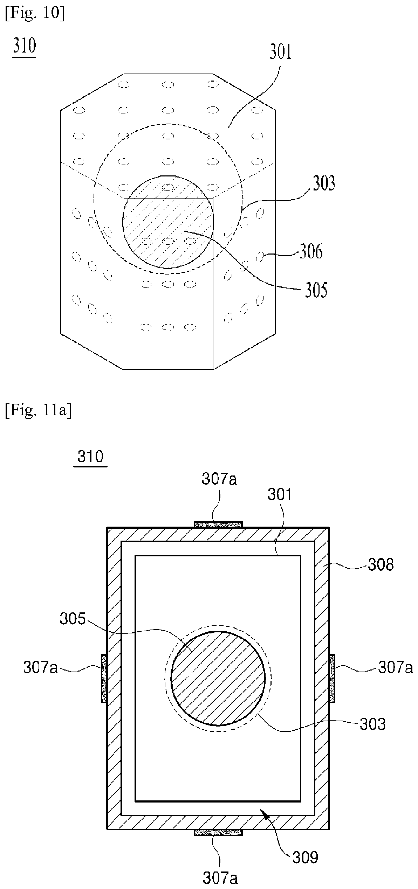

Next, as shown in Fig. 10, a plurality of minute holes 306 are formed in the external surface of the body part 301 of each mat member 310, and these minute holes 306 may minimize the sloshing of the fluid by increasing the specific surface area.

Next, as shown in Fig. 11a, each mat member 310 of the floating means 300 includes a body part 301 having a closed space 303 in the center of an inner portion, a buoyant body 305 arranged in the closed space 303 of the body part 301, and a cover 308 surrounding an external surface of the body part 301 and having at least one locking member 307a of a velcro tape type fixed to the external surface at predetermined intervals.

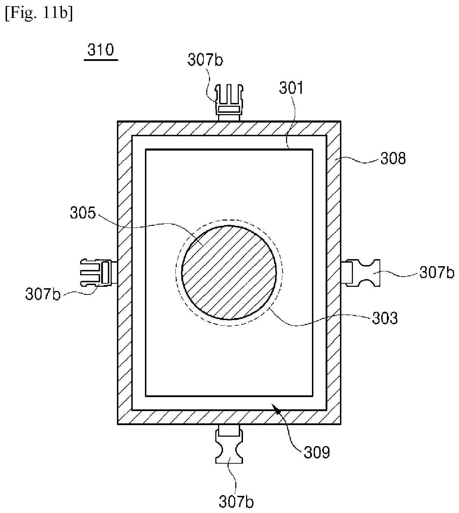

Also, as shown in Fig. 11b, instead of the locking member 307a of a velcro tape type, a locking member 307b of a hook type may be used.

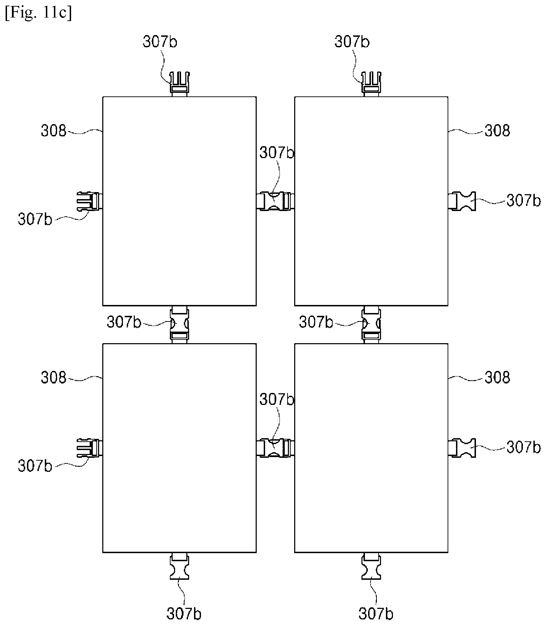

Thus, as shown in Fig. 11c, when a plurality of mat members 310 are arranged connectedly extending horizontally, without having to fix or connect neighboring body parts 301 or buoyant bodies 305 using a wire or rope, the plurality of mat members 310 may be connected quickly and easily using locking members 307 such as a velcro tape, a hook, etc.

Meanwhile, as shown in Fig. 11, by sealing the outside of the mat member 310 including a body part 301 and a buoyant body 305 once again, it is possible to continuously provide the unique function of attenuating the impact load resulting from the fluid while extending the body part 301 and the buoyant body 305 horizontally.

Meanwhile, preferably, a predetermined space 309 is formed between the body part 301 and the cover 308, and the position of the space 309 may be controlled so that the floating means 300 floats at a predetermined depth.

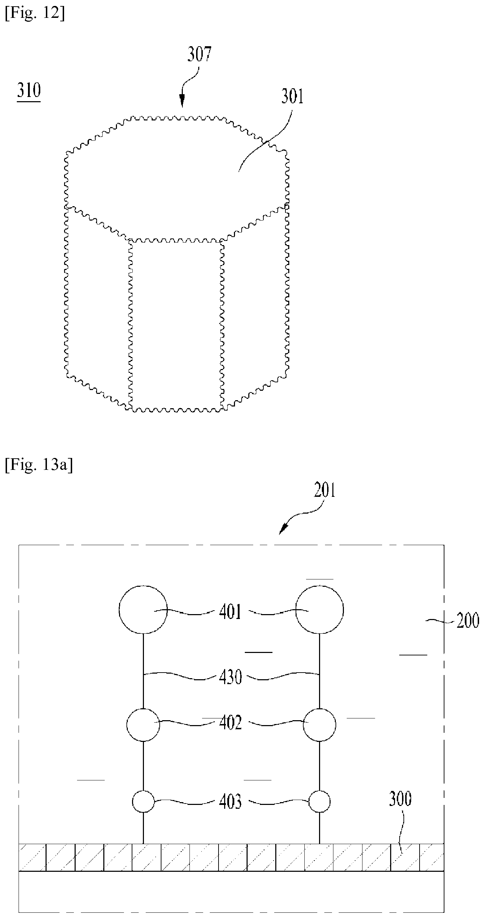

Also, as shown in Fig. 12, each mat member 310 of the floating means 300 may form an uneven pattern 307 at the side surface of the body part 301, and such uneven pattern 307 may be arranged irregularly, thereby minimizing the sloshing of the fluid.

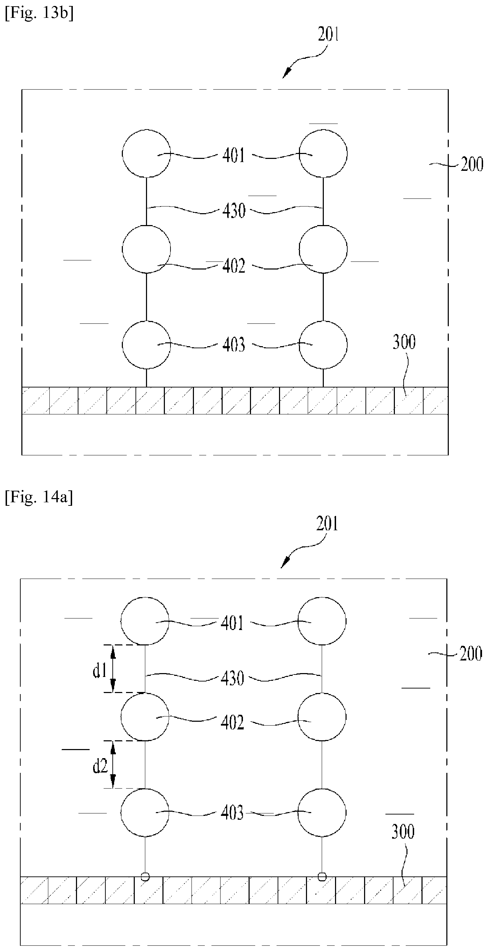

Figs. 13a and 13b are cross-sectional views illustrating that a position adjustment means applied to the system for controlling an impact load resulting from fluid under internal/external force in a specific environment according to the present invention is formed in various sizes.

Referring to Figs. 13a and 13b, the position adjustment means 400 is connected to the floating means 300, so as to be arranged in at least one direction among the upper direction and lower direction of the floating means 300.

Here, the position adjustment means 400 arranged in the lower direction of the floating means 300 may be arranged at a predetermined interval from the bottom surface of the transportation means. In this case, the position adjustment means 400 may have a specific gravity greater than the fluid 200.

Also, the position adjustment means 400 arranged in the upper direction of the floating means 300 may be arranged at a predetermined interval from the surface of the fluid 200. In this case, the position adjustment means 400 may have a specific gravity smaller than the fluid 200.

When there are a plurality of position adjustment means 400, the plurality of position adjustment means may be connected to one another by a connecting member 430.

For example, with regard to the position adjustment means 400, when a first floating inlet 401, a second floating inlet 402, and a third floating inlet 403 are arranged in order in a downward direction from the surface 201 of the fluid 200, the first floating inlet 401, the second floating inlet 402, and the third floating inlet 403 are formed to have different specific gravity.

For example, the first floating inlet 401 has the smallest specific gravity, the third floating inlet 403 has the greatest specific gravity, and the second floating inlet 402 is formed to have a specific gravity greater than the first floating inlet 401 and smaller than the third floating inlet 403.

In some cases, when there are a plurality of position adjustment means, as the position adjustment means gets farther from the floating means 300, the specific gravity of the position adjustment means 400 may get smaller gradually.

Also, as shown in Fig. 13a, with regard to the position adjustment means 400, when the first floating inlet 401, the second floating inlet 402, and the third floating inlet 403 are arranged in order in a downward direction from the surface 201 of the fluid 200, the first floating inlet 401, the second floating inlet 402, and the third floating inlet 403 may have different sizes.

For example, the first floating inlet 401 may be the largest, the third floating inlet 403 may be the smallest, and the second floating inlet 402 may be smaller than the first floating inlet 401 and larger than the third floating inlet 403.

For example, the first floating inlet 403 may be larger or smaller than the second floating inlets 401 and 402.

In some cases, when there are a plurality of position adjustment means 400, as the position adjustment means gets farther from the floating means 300, the size of the position adjustment means 400 may get smaller or larger gradually.

In some cases, as shown in Fig. 13b, the first floating inlet 401, the second floating inlet 402, and the third floating inlet 403 may have the same size.

As such, the position adjustment means 400 may be produced in various shapes according to their size and specific gravity.

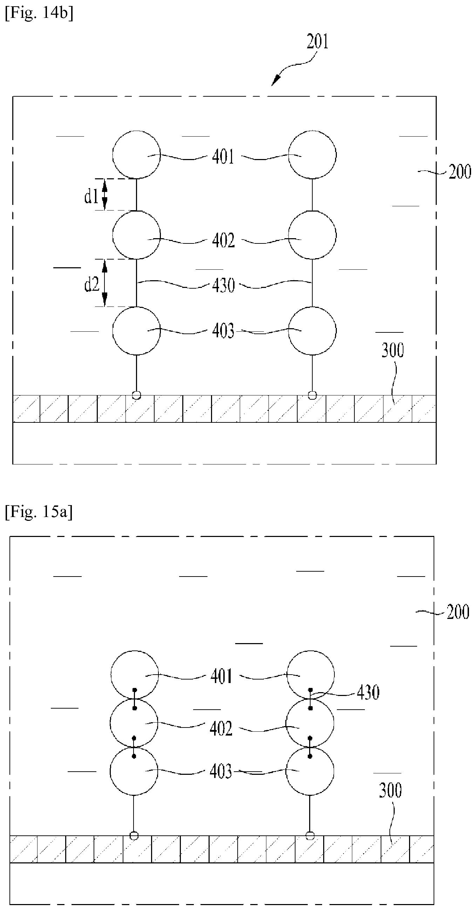

Figs. 14a and 14b are cross-sectional views illustrating intervals between the position adjustment means applied to the system for controlling an impact load resulting from fluid under internal/external force in a specific environment according to the present invention.

Referring to Figs. 14a and 14b, the position adjustment means 400 may be connected to the floating means 300 to be arranged in at least one direction of the upper direction and lower direction of the floating means 300.

Here, when there are a plurality of position adjustment means 400, the plurality of position adjustment means 400 are connected by a locking member 430.

For example, as shown in Fig. 14a, with regard to the position adjustment means 400, when the first floating inlet 401, the second floating inlet 402, and the third floating inlet 403 are arranged in order in a downward direction from the surface 201 of the fluid 200, interval d1 between the first floating inlet 401 and the second floating inlet 402, and interval d2 between the second floating inlet 402 and the third floating inlet 403 may be the same.

In some cases, as shown in Fig. 14b, with regard to the position adjustment means 400, when the first floating inlet 401, the second floating inlet 402, and the third floating inlet 403 are arranged in order in a downward direction from the surface 201 of the fluid 200, interval d1 between the first floating inlet 401 and the second floating inlet 402, and interval d2 between the second floating inlet 402 and the third floating inlet 403 may be different.

For example, interval d1 between the first floating inlet 401 and the second floating inlet 402 may be smaller or larger than interval d2 between the second floating inlet 402 and the third floating inlet 403.

In this regard, as the area where sloshing occurs varies according to the depth of the fluid 200, sloshing may be minimized by arranging the position adjustment means 400 only in an area with high sloshing according to the depth of the fluid by controlling the interval between the position adjustment means 400.

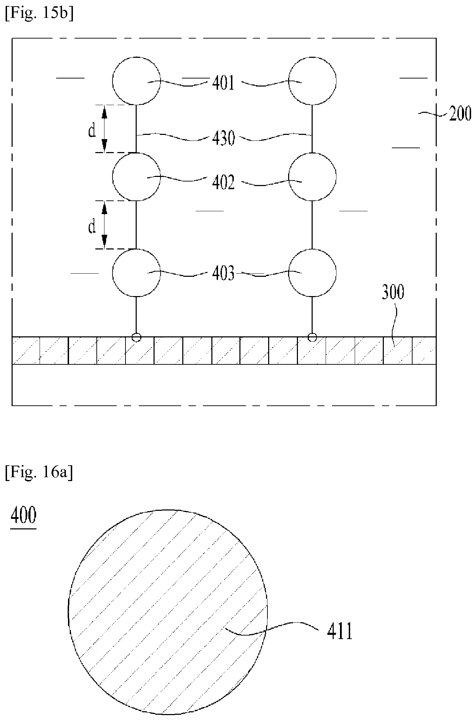

Figs. 15a and 15b are cross-sectional views illustrating a contact condition of position adjustment means applied to the system for controlling an impact load resulting from fluid under internal/external force in a specific environment according to the present invention.

Referring to Figs. 15a and 15b, the position adjustment means 400 may be connected to the floating means 300 to be arranged in at least one direction of the upper direction and lower direction of the floating means 300.

Here, when there are a plurality of position adjustment means 400, the plurality of position adjustment means 400 may be connected by a locking member 430.

For example, as shown in Fig. 15a, with regard to the position adjustment means 400, when the first floating inlet 401, the second floating inlet 402, and the third floating inlet 403 are arranged in order in a downward direction from the surface 201 of the fluid 200, the first floating inlet 401 and the second floating inlet 402 may be arranged to be in contact with each other, and the second floating inlet 402 and the third floating inlet 403 may be arranged to be in contact with each other.

In this case, sloshing may be minimized by arranging the position adjustment means 400 to be in contact with each other to be arranged in groups having a large area when sloshing occurring in the fluid occurs over a broad area in the depth direction.

In this case, as shown in Fig. 15b, with regard to the position adjustment means 400, when the first floating inlet 401, the second floating inlet 402, and the third floating inlet 403 are arranged in order in a downward direction from the surface 201 of the fluid 200, the first floating inlet 401 and the second floating inlet 402 may be arranged apart in a predetermined interval d, and the second floating inlet 402 and the third floating inlet 403 may be arranged apart in a predetermined interval d.

Figs. 16a to 16f are cross-sectional views illustrating an inner structure of a position adjustment means applied to the system for controlling an impact load resulting from fluid under internal/external force in a specific environment according to the present invention.

Referring to Figs. 16a to 16f, the position adjustment means 400 may be connected to the floating means 300 to be arranged in at least one direction of the upper direction and lower direction of the floating means 300.

As shown in Fig. 16a, the position adjustment means 400 may be configured only of a body part 411 made of materials such as aluminum or aluminum alloy to play the role of a buoyant body.

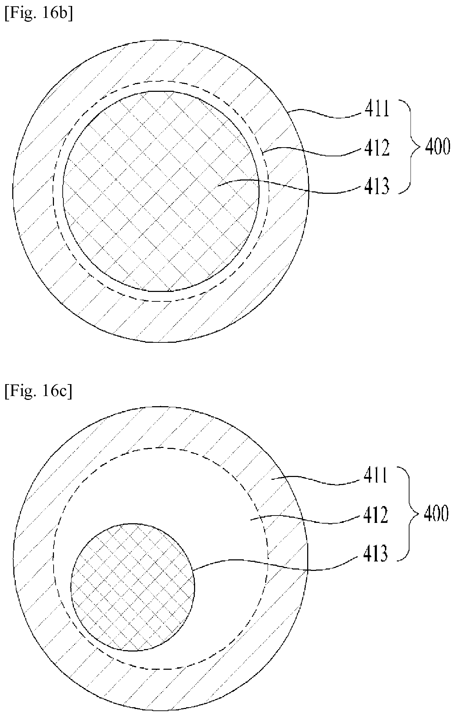

Next, as shown in Figs. 16b and 16c, the position adjustment means 400 may include a body part 411 having a closed space 412 in the center of an inner portion, and a buoyant body 413 arranged in the closed space 412 of the body part 411.

Here, as shown in Fig. 16b, the buoyant body 413 may take up the entire area of the closed space 412, and in some cases, as shown in Fig. 16c, the buoyant body 413 may take up only part of the area of the closed space 412 and leave a space for controlling the position so that the floating means 100 floats at a predetermined depth.

Here, the body part 411 may be a foam member, and the buoyant body 413 may be made of a material having a predetermined specific gravity such as aluminum or aluminum alloy.

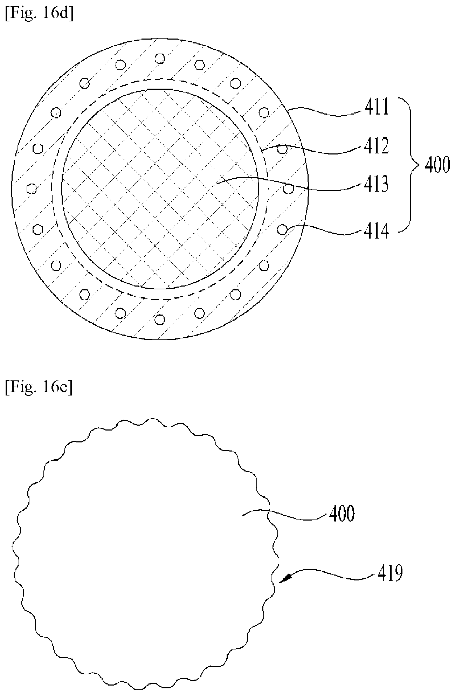

Next, as shown in Fig. 16d, the position adjustment means 400 may be formed of a plurality of minute holes 414 in the external surface of the body part 411.

These minute holes 414 may minimize the sloshing of the fluid by increasing the specific gravity.

Next, as shown in Fig. 16e, the first floating body 410 or the second floating body 420 of the position adjustment means 400 includes a body part 411 having a closed space 412 in the center of an inner portion, a buoyant body 413 arranged in the closed space 412 of the body part 411, and a cover 416 surrounding an external surface of the body part 411 and having locking members 417 and 418 fixed to the upper surface and lower surface.

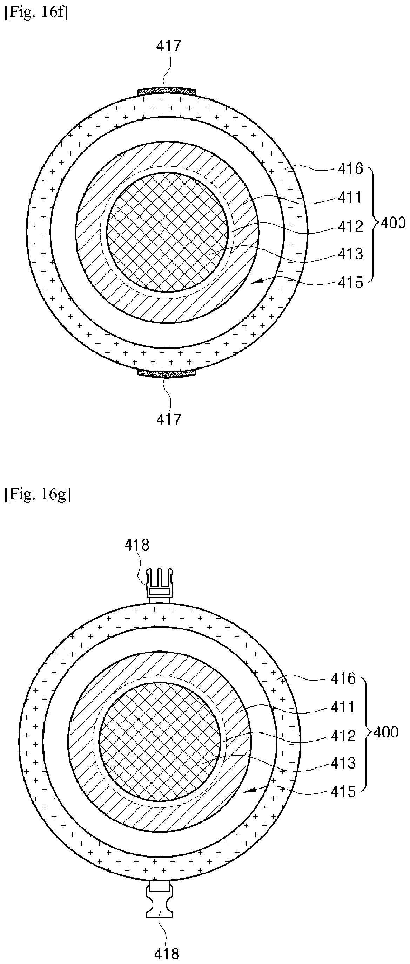

Here, as shown in Fig. 16e, the locking member may be used selected from a locking member 417 of a velcro tape type, or from a locking member 318 of a hook type as shown in Fig. 16f.

Thus, as shown in Fig. 16g, when a plurality of position adjustment means 400 are connectedly arranged horizontally, without having to fix or connect neighboring body parts 411 or buoyant bodies 413 using a wire or rope, the plurality of position adjustment means 400 may be connected quickly and easily using locking members 417 and 418 such as a velcro tape, a hook, etc.

Meanwhile, as shown in Figs. 16e and 16f, by sealing the outside of the position adjustment means 400 including a body part 411 and a buoyant body 413 once again, it is possible to continuously provide the unique function of attenuating the impact load resulting from the fluid while extending the body part 411 and the buoyant body 413 horizontally.

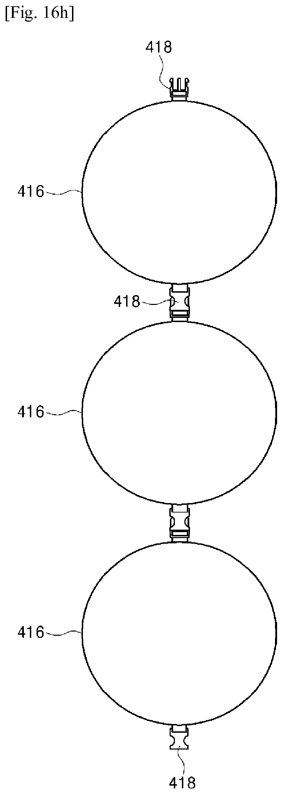

Also, as shown in Fig. 16h, the position adjustment means 400 may arrange an uneven pattern 419 at the side surface of the body part 411 irregularly, thereby minimizing the sloshing of the fluid.

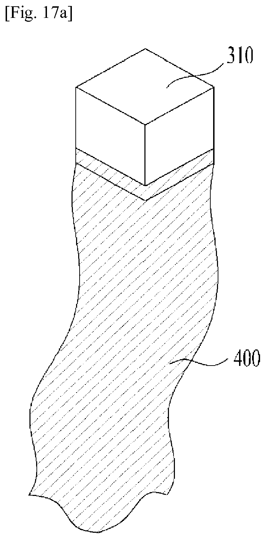

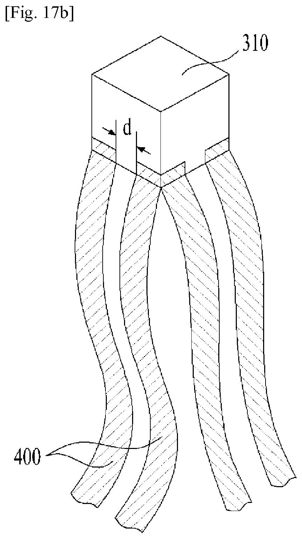

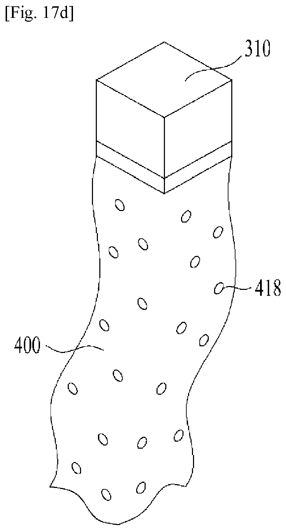

Figs. 17a, 17b, 17d are perspective views illustrating a position adjustment means having a curtain shape applied to the system for controlling an impact load resulting from fluid under internal/external force in a specific environment not part of the present invention.

Referring to Figs. 17a to 17d, the position adjustment means 400 having a curtain shape may be arranged in the lower direction of the floating means.

Here, as shown in Fig. 17a, the position adjustment means 400 having a curtain shape may be one single member arranged to surround a side circumference of the mat member 310 of the floating means.

In some cases, as shown in Fig. 17b, the position adjustment means 400 having a curtain shape may be a plurality of members arranged to surround a side circumference of the connecting block 310 of the floating means.

Here, when there are a plurality of members of the position adjustment means 400 having a curtain shape, the adjacent position adjustment means 400 may be arranged at a predetermined interval d.

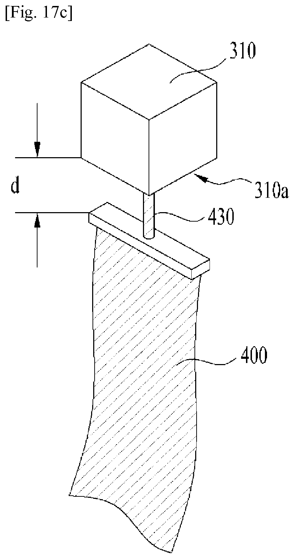

Also, as shown in Fig. 17c, the position adjustment means 400 having a curtain shape may be arranged at a predetermined interval d from the lower surface 310a of the mat member 310.

Here, the position adjustment means 400 having a curtain shape may be connected to the mat member 310 by a connecting member 430.

Also, as shown in Fig. 17d, the position adjustment means 400 having a curtain shape may be formed of a plurality of holes 418.

Here, the position adjustment means 400 having a curtain shape may include at least one of phenol resin, melamine resin, and synthetic resin thereof.

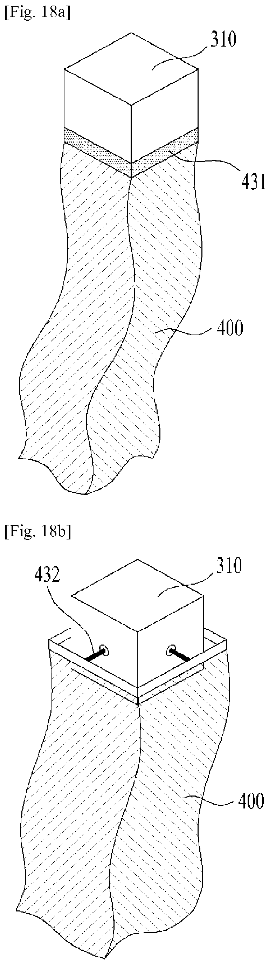

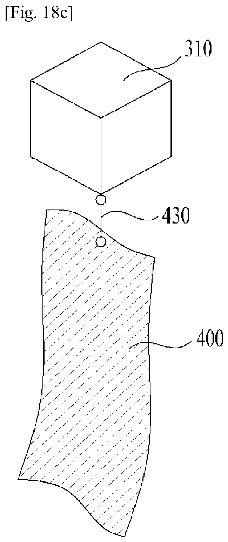

Figs. 18a to 18c are perspective views illustrating a condition of the connection between a position adjustment means having a curtain shape and a floating means applied to the system for controlling an impact load resulting from fluid under internal/external force in a specific environment according to the present invention.

As shown in Figs. 18a to 18d, the position adjustment means 400 having a curtain shape may be connected in the lower direction of the floating means 300.

Here, the position adjustment means 400 having a curtain shape may be connected to a mat member 310 using at least one of an adhesive 431 and a locking member 430.

As shown in Fig. 18b, one end of the connecting member 430 is locked to a side surface of the mat member 310, and the other end is locked to an end of the position adjustment means 400 having a curtain shape.

In some cases, the connecting member 430 may be locked to a lower surface of the mat member 310, and the other end may be locked to an end of the position adjustment means 400 having a curtain shape.

Figs. 19a and 19b are cross-sectional views illustrating an arrangement of a sensor sensing a movement of impact load of fluid applied to the system for controlling an impact load resulting from fluid under internal/external force in a specific environment according to the present invention.

As shown in Figs. 19a and 19b, the sensing means 500 may sense a movement of an impact load of the fluid by being arranged in at least one of a floating means 300, a position adjustment means 400, and a fluid 200. The sensing means 500 may include a selective combination of at least one of an acceleration sensor 510, an inertia sensor 520, a vibration sensor 530, an acoustic sensor 540, a temperature sensor 550, a pressure sensor 560, a shape sensor 570, and a strain sensor 580.

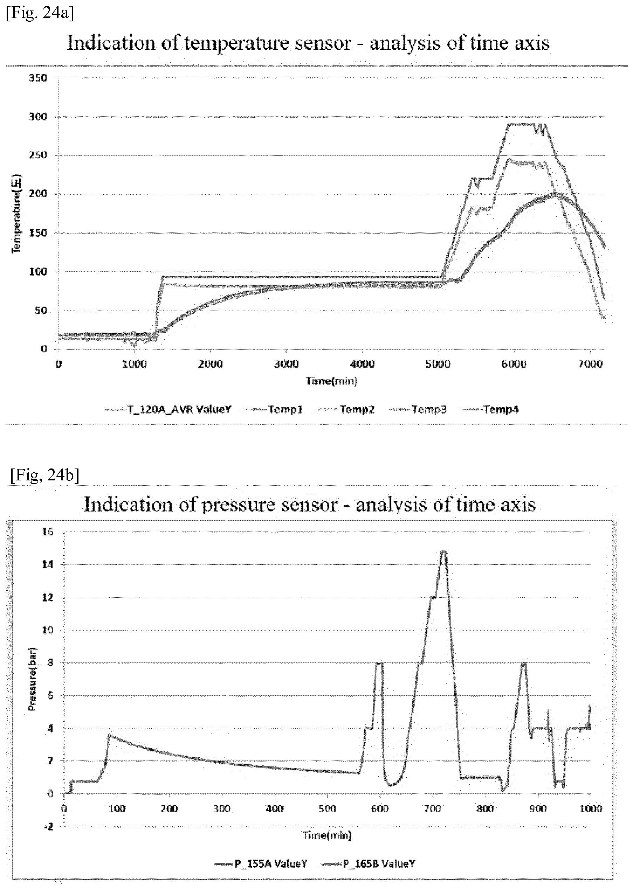

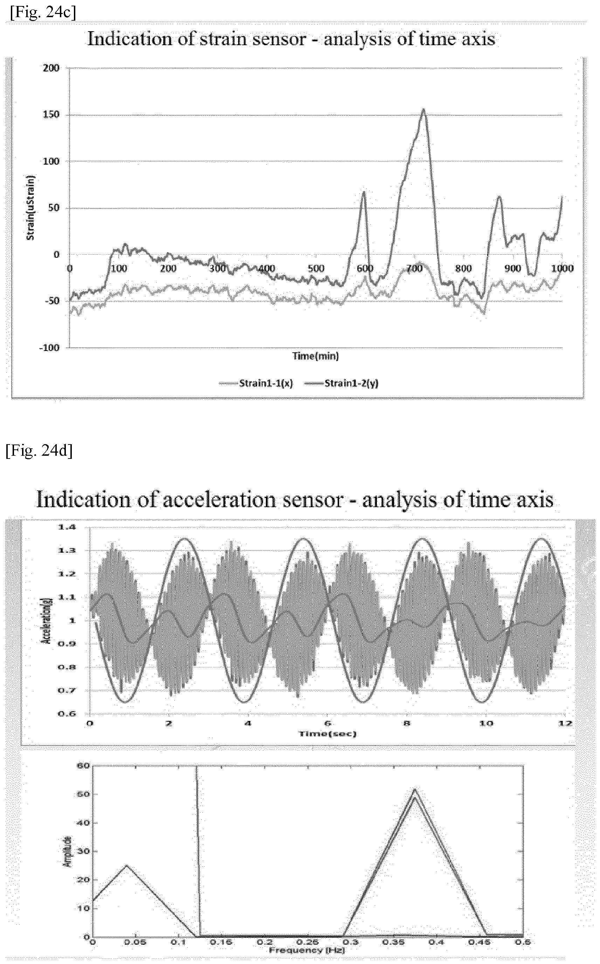

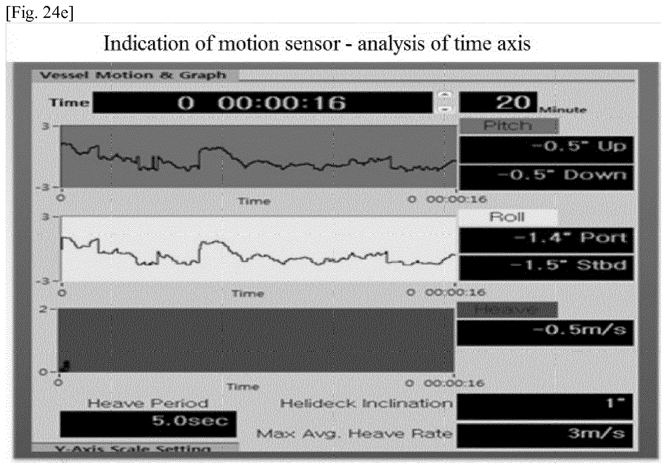

Here, a bumper plate 150 controlling the movement of the impact load of the fluid may be further arranged in an inner wall of the transportation means 100, and a sensing means 500 sensing the movement of the impact load of the fluid may be further arranged in the bumper plate 150. Fig. 24 illustrates examples of measurement data according to the acceleration sensor, temperature sensor, and pressure sensor.

Here, the acceleration sensor 510 is a sensor generating power when an object with mass receives acceleration and measuring the change in speed (acceleration) of at least one axis. It may measure dynamic power such as acceleration, vibration, impact, etc. of the floating means 300, position adjustment means 400, fluid 200 and bumper plate 150, etc.

Also, the inertia sensor 520 is a sensor detecting inertial force acting on an inertial object by the acceleration applied. It may measure the acceleration, speed, direction, distance, etc. of the measurement object, which is a moving object.

Next, the vibration sensor 530 is a sensor detecting the vibration of mechanical structures and fluid. It may measure vibration generated in the floating means 300, position adjustment means 400, fluid 200, and bumper plate 150, etc., and measure the vibration generated by the impact between the floating means 300 and transportation means 100 such as a container, etc.

Next, the sound sensor 540 is a sensor sensing the conversion of particle motion generated by an elastic wave into electric signals. It may receive an acoustic emission wave and convert it into an acoustic emission signal, and detect minute crevice and crack generated in the floating means 300, position adjustment means 400, fluid 200, and bumper plate 150, etc.

The temperature sensor 550 is a sensor detecting the temperature of gas, fluid and solid. It may measure the temperature varying in the floating means 300, position adjustment means 400, fluid 200, bumper plate 150, transportation means 100, etc.

Also, the pressure sensor 560 is a sensor detecting the pressure of gas or fluid. It is a sensor using heat conductivity of molecule density in addition to displacement or deformation. It may measure the change in pressure according to the capacity of fluid 200 within transportation means 100 such as a container, etc.

Next, the shape sensor 570 is a shape recognizing sensor confirming the presence, position and shape of an object. It may detect the presence, position and shape of the floating means 300, position adjustment means 400, fluid 200, bumper plate 150, transportation means 100, etc.

As such, the present invention may precisely measure the predicted occurrence of impact load of the fluid using various sensing means 500.

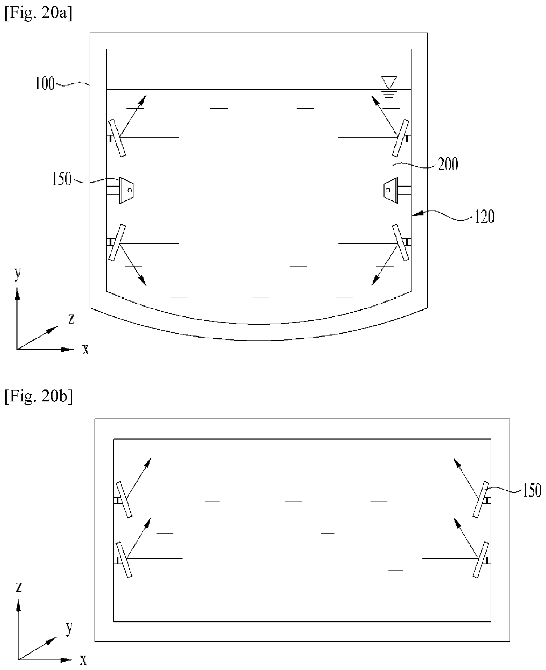

Figs. 20a and 20b are cross-sectional views illustrating a condition having a bumper plate installed in an inner wall of a transportation means when the system for controlling an impact load resulting from fluid under internal/external force in a specific environment according to a preferable embodiment of the present invention is installed in a transportation means.

Referring to Figs. 20a and 20b, a bumper plate 150 controlling the movement of the impact load of the fluid may be arranged in the inner wall 120 of the transportation means 100.

Here, the bumper plate 150 is fixed to a fixed axis connected to the inner wall 120 of the transportation means 100, enabling rotation movement in the up/down/left/right direction so as to change the moving direction of the fluid 200.

That is, as shown in Figs. 20a and 20b, the bumper plate 150 may rotate in the Y-axis direction and Z-axis direction.

In this case, the surface of the bumper plate 150 may be inclined in a predetermined angle with respect to the surface of the inner wall 120 of the transportation means 100.

For example, when a plurality of bumper plates 250 are arranged in the height direction of the transportation means 100, the angle between the surface of the bumper plate 150 and the inner wall 120 surface of the transportation means 100 may vary in the height direction of the transpiration means 100.

Also, the surface of the bumper plate 150 may be irregular.

As such, the reason for arranging the bumper plate 150 is to attenuate the sloshing of the fluid 200 facing the inner wall 120 of the transportation means 100 with the irregular surface of the bumper plate 150, and to minimize the sloshing by offsetting the fluids 200 having different moving directions by changing the moving direction of the fluid 200 to be irregular.

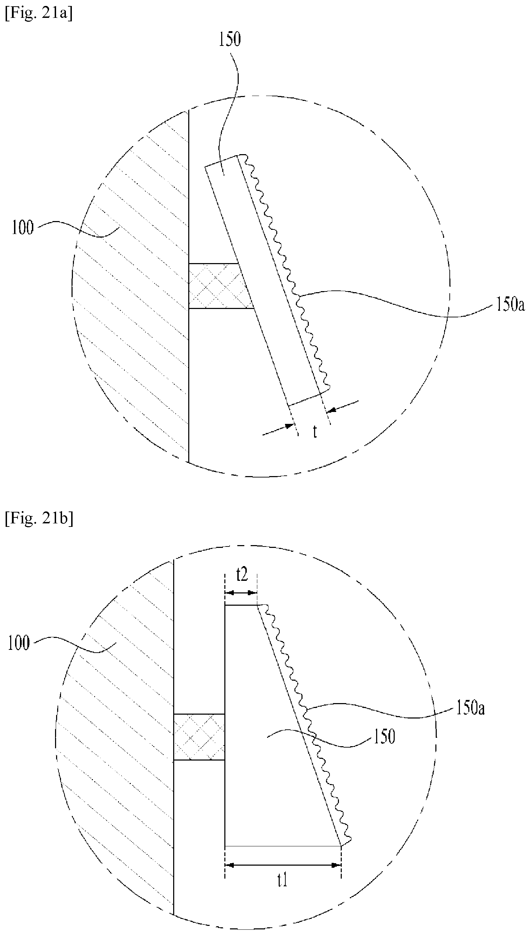

Figs. 21a and 21b are side cross-sectional views illustrating a thickness of a bumper plate installed in an inner wall of a transportation means when the system for controlling an impact load resulting from fluid under internal/external force in a specific environment according to a preferable embodiment of the present invention is installed in a transportation means.

Referring to Figs. 21a and 21b, a bumper plate 150 controlling the movement of the impact load of the fluid may be arranged in the inner wall of the transportation means 100.

Here, as shown in Fig. 21a, the thickness t of the bumper plate 150 may be constant from one end to the other end.

In this case, the surface of the bumper plate 150 may be formed of an irregular uneven pattern 150a.

Also, the surface of the bumper plate 150 may be inclined in a predetermined angle with respect to the inner wall surface of the transportation means 100.

In some cases, as shown in Fig. 21b, the thickness t of the bumper plate 150 may gradually gets thinner from one end to the other end.

Here, the bumper plate 150 may be controlled so that the surface facing the inner wall surface of the transportation means 100 is parallel, and the surface opposite to the inner wall surface of the transportation means 100 is inclined at a predetermined angle. That is, the bumper plate 150 is installed to be controllable in a direction selected from up, down, left and right directions by the worker, so as to effectively disperse the power applied to the transportation means 100 or maritime structure by passive fluid dynamics or motion generation of sloshing generated by being set in the up/down direction or left/right direction.

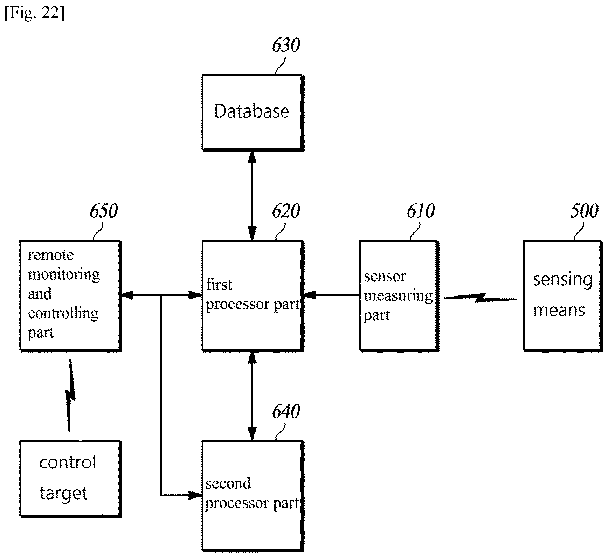

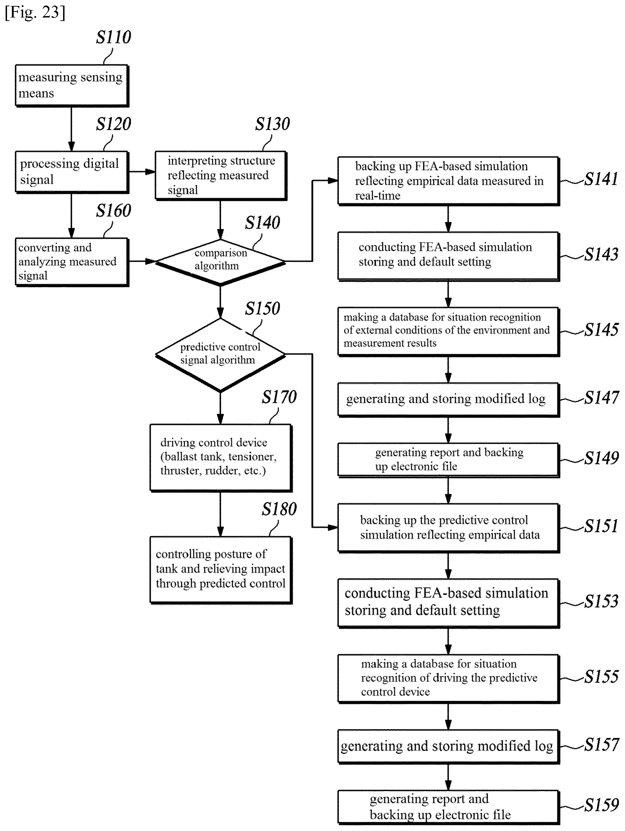

Fig. 22 is a block diagram of a control means 600 applied to the system for controlling an impact load resulting from fluid under internal/external force in a specific environment according to a preferable embodiment of the present invention. Fig. 23 is a control flow chart for explaining a control operation of the system for controlling an impact load resulting from fluid under internal/external force in a specific environment according to a preferable embodiment of the present invention.

First, referring to Fig. 22, the control mean 600 includes a sensor measuring part 610 converting a physical change of a measurement object sensed by the sensing means 500 into a digital signal and outputting the digital signal, a processor part for analysis and comparison algorithm 620 conducting structure interpretation, comparison and analysis on an impact load inside the fluid 200 and an impact load generated in the floating means 300, the position adjustment means 400, the transportation means 100 or the maritime structure by using data transmitted and measured at the sensor measuring part 610, a database 630 storing a look-up table made by making an algorithm of the result analyzed at the processor part for analysis and comparison algorithm 620, a processor for predictive diagnosis and control signal algorithm 640 predicting impact load data on a response of the transportation means 100 or the maritime structure by comparing data measured at the sensing means 500 with data on internal/external force accumulated in the look-up table stored in the database 630, and a remote monitoring and controlling part 650 remotely-controlling the driving of a control target device in the transportation means 100 by using a predictive control signal algorithm outputted from the processor for predictive diagnosis and control signal algorithm 650.

Here, the look-up table records time-serial data by the year, and the look-up table may be modified by comparing the time-serial data by the year accumulated until the previous year with the data measured through the sensing means 500.

Hereinafter, the operation of the control means is explained referring to Fig. 23.

First, the sensor measuring part 610 receives change in acceleration, inertia, vibration, sound, temperature, pressure, shape, strain, etc. of the sensed object sensed by the sensing means 500 in the fluid 200, floating means 300 and position adjustment means 400 and converts it into digital signal that may be measured (S110, S120).

The processor part for analysis and comparison algorithm 620 structurally interprets, compares and analyzes the impact load resulting from non-periodic coupled energy and response thereto occurring in the fluid 200, floating means 300 and position adjustment means 400, transportation means 100 or maritime structure by using data measured by the sensing means 500 transmitted to the sensor measuring part 610 (S130).

Next, the processor part for analysis and comparison algorithm 620 makes a look-up table with FEA-based simulation reflecting empirical data measured in real-time at the database 630 by making an algorithm of the analyzed result by using comparative algorithm and predictive control signal algorithm (S140, S150).

Here, making an algorithm in S140 includes backing up FEA-based simulation reflecting empirical data measured in real-time (S141), conducting FEA-based simulation storing and default setting (S143), making a database for situation recognition of external conditions of the environment and measurement results (S145), generating and storing modified log (S147), and generating report and backing up electronic file (S149).

Also, the predictive control signal algorithm in S150 includes backing up the predictive control simulation reflecting empirical data (S151), conducting FEA-based simulation storing and default setting (S153), making a database for situation recognition of driving the predictive control device (S155), generating and storing modified log (S157), and generating report and backing up electronic file (S159).

The remote monitoring and controlling part 640 remotely-controls the driving of the control target device (for example, ballast tank, tensioner, thruster, rudder, etc.) in the transportation means 100 by using a predictive control signal algorithm stored in the database 630 (S170).

Thus, the remote monitoring and controlling part 650 may control the posture or navigation path of the transportation means 100 or maritime structure using data on the predicted response of the transportation means 100 or maritime structure (S180).

The system for controlling an impact load resulting from a fluid under an internal/external force in a specific environment according to the present invention as explained in the above can minimize the impact load and boil off gas (BOG) of the fluid
while efficiently sensing the impact load of various fluids including sloshing, slamming, ice collision, etc., and allow a simple and quick process of the work of connecting a plurality of mat members and maintenance thereof through a detachable member fixed to the cover of a mat member.

## Claims

1. A system for controlling an impact load resulting from a fluid under an internal/external force in a specific environment, the system comprising:
a floating means (300) arranged horizontally inside a predetermined amount of fluid (200) existing in an open space or in a space having a sealed interior;
a position adjustment means (400) vertically connected to the floating means (300) and arranged in a preset position inside the fluid;
a sensing means (500) selectively installed inside the fluid (200), on the floating means (300), on the position adjustment means (400), or on a structure positioned in the periphery to sense a physical change of at least one preset measurement object; and
a control means (600) for predicting/monitoring and predicting/controlling fluid dynamics-related environment internal/external forces, hull stress, six-degree-of-freedom movements, and positions in connection with a transportation means (100) or a maritime structure, on which the floating means (300), the position adjustment means (400), and the sensing means (500) are installed, using the physical change value related to the measurement object transmitted from the sensing means (500),
**characterized in that** the position adjustment means (400) comprises at least one of a first floating body (410) arranged at an upper part of the floating means (300) and at least one of a second floating body (420) arranged at a lower part of the floating means (300), and
wherein the system further comprises a connecting member (430) connecting the first floating body (410) and the second floating body (420) to the floating means (300), and
wherein the first floating body (410) has a specific gravity smaller than the fluid (200) and the floating means (300), the second floating body (420) has a specific gravity greater than the fluid (200) and the floating means (300), and the floating means (300) has a specific gravity greater than the fluid (200) and the first floating body (410) and smaller than the second floating body (420).

2. The system of claim 1, wherein the floating means (300) comprises at least one mat member (310) locked to one another, and each mat member (310) comprises a body part (301) having a closed space (303) in the center of an inner portion, a buoyant body (305) arranged in the closed space (303) of the body part (301), and a cover (308) surrounding an external surface of the body part (301) and having at least one locking member (307) fixed to the external surface at predetermined intervals.

3. The system of claim 2, wherein the plurality of mat members (310) are arranged at predetermined intervals to have a predetermined empty space, so as to re-collect evaporated fluid at an upper part of the mat member (310) in a liquid state when liquid included in the fluid (200) and the mat member (310) are sprayed between the mat members (310) by inertial motion during movement, or wherein identification marks (317, 319) capable of identifying an image or laser are formed or attached to an upper surface of each mat member (310), so as to allow the control means (600) to measure and diagnose the position and six-degree-of-freedom movement of each mat member (310).

4. The system of claim 1, wherein each first floating body (410) or second floating body (420) comprises a body part (411) having a closed space (412) in the center of an inner portion, a buoyant body (413) arranged in the closed space (412) of the body part (411), and a cover (416) surrounding an external surface of the body part (411) and having upper and lower locking members (417, 418) fixed to the upper surface and lower surface.

5. The system of claim 1, wherein when transporting the fluid (200) in a storage state using a closed transportation means (100), a bumper plate (150) controlling the movement of an impact load of the fluid (200) is arranged in an inner wall of the transportation means (100), and the bumper plate (150) is installed to be selectively controllable in the up, down, left and right directions, or wherein the sensing means (500) comprises a selective combination of at least one of an acceleration sensor (510), an inertia sensor (520), a vibration sensor (530), a sound sensor (540), a temperature sensor (550), a pressure sensor (560), a shape sensor (570), and a strain sensor (580), or when the floating means (300) comprises a first mat member (311) arranged in an odd number of columns and a second mat member (312) arranged in an even number of columns, the first mat member (311) and the second mat member (312) are arranged crisscross each other, and are formed in different shapes.

6. The system of claim 1, wherein the control means (600) comprises:
a sensor measuring part (610) converting a physical change of a measurement object sensed by the sensing means (500) into a digital signal and outputting the digital signal;
a processor part for analysis and comparison algorithm (620) conducting structure interpretation, comparison and analysis on an impact load inside the fluid (200) and an impact load generated in the floating means (300), the position adjustment means (400), the transportation means (100) or the maritime structure by using data transmitted and measured at the sensor measuring part (610);
a database (630) storing a look-up table made by making an algorithm of the result analyzed at the processor part for analysis and comparison algorithm (620);
a processor for predictive diagnosis and control signal algorithm (640) predicting impact load data on a response of the transportation means (100) or the maritime structure by comparing data measured at the sensing means (500) with data on internal/external force accumulated in the look-up table stored in the database (630); and
a remote monitoring and controlling part (650) remote-controlling the driving of a control target device in the transportation means (100) by using a predictive control signal algorithm output from the processor for predictive diagnosis and control signal algorithm (650).

7. The system of claim 6, wherein the control target device in the transportation means (100) is a selective combination of a ballast tank, a tensioner, a thruster, and a rudder, or wherein the remote monitoring and controlling part (650) controls the posture or navigation path of the transportation means (100) or the maritime structure in real-time using predicted response data on the transportation means (100) or the maritime structure.

8. The system of claim 1, wherein the floating member (300) is lockably fixed to the transportation means (100), or floats within the fluid (200) by itself without being locked, or wherein at least one of the first floating body (410) and the second floating body (420) of the position adjustment means (400) is arranged irregularly, or wherein the first floating body (410) of the position adjustment means (400) is a floating member having a buoyant body.

9. The system of claim 1, wherein the second floating body (420) of the position adjustment means (400) is at least one of a floating member having a buoyant body and a curtain member having a curtain shape.

10. The system of claim 5, wherein when a plurality of bumper plates (150) are arranged in a height direction of the transportation means (100), an angle between a surface of the bumper plate (150) and an inner wall surface of the maritime structure is different from each other in a height direction of the maritime structure.

11. The system of claim 10, wherein the bumper plate (150) is formed to have a thickness gradually thinner from one end to the other end.

12. The system of claim 1, wherein the first floating body (410) connected to an upper part of the position adjustment means (400) is a floating member having a buoyant body, and the second floating body (420) connected to a lower part of the position adjustment means (400) is formed of a curtain member (420b) formed of a phenol resin, a melamine resin, or a synthetic resin thereof.

13. The system of claim 1, wherein the curtain member (420b) is formed of one single member arranged to surround a side circumference of the floating means (300), or a plurality of members arranged to surround a side circumference of the floating means (300).

## Patentansprüche

1. System zum Steuern einer aus einem Fluid resultierenden Stoßlast unter einer internen/externen Kraft in einer spezifischen Umgebung, wobei das System umfasst:
eine schwimmende Einrichtung (300), die innerhalb einer vorgegebenen Menge an Fluid (200), die in einem offenen Raum oder in einem ein abgedichtes Inneres aufweisenden Raum vorhanden ist, horizontal angeordnet ist;
eine Positionsjustierungseinrichtung (400), die mit der schwimmenden Einrichtung (300) vertikal verbunden und in einer voreingestellten Position innerhalb des Fluids angeordnet ist;
eine Erfassungseinrichtung (500), die innerhalb des Fluids (200) an der schwimmenden Einrichtung (300), an der Positionsjustierungseinrichtung (400) oder an einer am Umfang positionierten Struktur selektiv installiert ist, um eine physikalische Änderung wenigstens eines voreingestellten Messobjekts zu erfassen; und
eine Steuereinrichtung (600) zum Vorhersagen/Überwachen und Vorhersagen/Steuern von fluiddynamikbezogenen internen/externen Umgebungskräften, einer Rumpfbelastung, Bewegungen in sechs Freiheitsgraden, und Positionen in Verbindung mit einer Transporteinrichtung (100) oder einer maritimen Struktur, an der die schwimmende Einrichtung (300), die Positionsjustierungseinrichtung (400), und die Erfassungseinrichtung (500) installiert sind, unter Verwendung des auf das Messobjekt bezogenenen Werts der physikalischen Änderung, der von der Erfassungseinrichtung (500) übertragen wurde,
**dadurch gekennzeichnet, dass** die Positionsjustierungseinrichtung (400) wenigstens einen von einem ersten schwimmenden Körper (410), der an einem oberen Teil der schwimmenden Einrichtung (300) angeordnet ist, und wenigstens einen von einem zweiten schwimmenden Körper (420), der an einem unteren Teil der schwimmenden Einrichtung (300) angeordnet ist, umfasst, und
wobei das System ferner ein Verbindungselement (430) umfasst, das den ersten schwimmenden Körper (410) und den zweiten schwimmenden Körper (420) mit der schwimmenden Einrichtung (300) verbindet, und
wobei der erste schwimmende Körper (410) ein kleineres spezifisches Gewicht als das Fluid (200) und die schwimmende Einrichtung (300) aufweist, der zweite schwimmende Körper (420) ein größeres spezifisches Gewicht als das Fluid (200) und die schwimmende Einrichtung (300) aufweist, und die schwimmende Einrichtung (300) ein größeres spezifisches Gewicht als das Fluid (200) und der erste schwimmende Körper (410) und ein kleineres spezifisches Gewicht als der zweite schwimmende Körper (420) aufweist.

2. System nach Anspruch 1, wobei die schwimmende Einrichtung (300) wenigstens ein Mattenelement (310) umfasst, die aneinander arretiert sind, und jedes Mattenelement (310) ein Körperteil (301), das einen geschlossenen Raum (303) im Zentrum eines inneren Abschnitts aufweist, einen Auftriebskörper (305), der in dem geschlossenen Raum (303) des Körperteils (301) angeordnet ist, und eine Abdeckung (308) umfasst, die eine externe Oberfläche des Körperteils (301) umgibt und wenigstens ein Arretierungselement (307) aufweist, das in vorgegebenen Abständen an der externen Oberfläche fixiert ist.

3. System nach Anspruch 2, wobei die Vielzahl von Mattenelementen (310) in vorgegebenen Abständen angeordnet sind, so dass sie einen vorgegebenen leeren Raum aufweisen, um verdunstetes Fluid an einem oberen Teil des Mattenelements (310) in einem flüssigen Zustand wieder zu sammeln, wenn in dem Fluid (200) und dem Mattenelement (310) enthaltene Flüssigkeit durch eine Trägheitsbewegung während einer Bewegung zwischen den Mattenelementen (310) versprüht wird, oder wobei Identifizierungsmarkierungen (317, 319), die in der Lage sind, ein Bild oder einen Laser zu identifizieren, an einer oberen Oberfläche jedes Mattenelements (310) gebildet oder angebracht sind, um es der Steuereinrichtung (600) zu erlauben, die Position und Bewegung in sechs Freiheitsgraden jedes Mattenelements (310) zu messen und diagnostizieren.

4. System nach Anspruch 1, wobei jeder erste schwimmende Körper (410) oder zweite schwimmende Körper (420) ein Körperteil (411), das einen geschlossenen Raum (412) im Zentrum eines inneren Abschnitts aufweist, einen Auftriebskörper (413), der in dem geschlossenen Raum (412) des Körperteils (411) angeordnet ist, und eine Abdeckung (416) umfasst, die eine externe Oberfläche des Körperteils (411) umgibt und obere und untere Arretierungselemente (417, 418) aufweist, die an der oberen Oberfläche und der unteren Oberfläche fixiert sind.

5. System nach Anspruch 1, wobei beim Transportieren des Fluids (200) in einem Lagerungszustand unter Verwendung einer geschlossenen Transporteinrichtung (100) eine Prallplatte (150), die die Bewegung einer Stoßlast des Fluids (200) steuert, in einer Innenwand der Transporteinrichtung (100) angeordnet ist, und die Prallplatte (150) so installiert ist, dass sie in den Auf-, Ab-, Links- und Rechts-Richtungen selektiv steuerbar ist, oder wobei die Erfassungseinrichtung (500) eine selektive Kombination von wenigstens einem eines Beschleunigungssensors (510), eines Trägheitssensors (520), eines Vibrationssensors (530), eines Schallsensors (540), eines Temperatursensors (550), eines Drucksensors (560), eines Formsensors (570) und eines Dehnungssensors (580) umfasst, oder, wenn die schwimmende Einrichtung (300) ein erstes Mattenelement (311), das in einer ungeraden Zahl von Reihen angeordnet ist, und ein zweites Mattenelement (312), das in einer geraden Zahl von Reihen angeordnet ist, umfasst, das erste Mattenelement (311) und das zweite Mattenelement (312) über Kreuz zueinander angeordnet sind und in unterschiedlichen Formen gebildet sind.

6. System nach Anspruch 1, wobei die Steuereinrichtung (600) umfasst:
ein Sensormessteil (610), das eine durch die Erfassungseinrichtung (500) gemessene physikalische Änderung eines Messobjekts in ein Digitalsignal umwandelt und das Digitalsignal ausgibt;
ein Prozessorteil für einen Analyse- und Vergleichsalgorithmus (620), der eine Strukturinterpretation, einen Vergleich und eine Analyse über eine Stoßlast innerhalb des Fluids (200) und eine in der schwimmenden Einrichtung (300), der Positionsjustierungseinrichtung (400), der Transporteinrichtung (100) oder der maritimen Struktur erzeugte Stoßlast unter Verwendung von an dem Sensormessteil (610) übermittelten und gemessenen Daten durchführt;
eine Datenbank (630), die einen Look-Up-Table speichert, der durch Erstellen eines Algorithmus des an dem Prozessorteil für einen Analyse- und Vergleichsalgorithmus (620) analysierten Ergebnisses erstellt wurde;
einen Prozessor für einen Vorhersagediagnose- und Steuersignalalgorithmus (640), der Stoßlastdaten über eine Reaktion der Transporteinrichtung (100) oder der maritimen Struktur durch Vergleichen von an der Erfassungseinrichtung (500) gemessenen Daten mit Daten über eine interne/externe Kraft, die in dem in der Datenbank (630) gespeicherten Look-Up-Table akkumuliert wurden, vorhersagt; und
ein Fernüberwachungs- und steuerungsteil (650), das den Antrieb einer Steuerzielvorrichtung in der Transporteinrichtung (100) durch Verwendung einer Vorhersagesteuer-signalalgorithmusausgabe von dem Prozessor für einen Vorhersagediagnose- und Steuersignalalgorithmus (640) fernsteuert.

7. System nach Anspruch 6, wobei die Steuerzielvorrichtung in der Transporteinrichtung (100) eine selektive Kombination eines Ballasttanks, eines Spanners, eines Stoßers und eines Ruders ist, oder wobei das Fernüberwachungs- und steuerungsteil (650) die Haltung oder den Navigationspfad der Transporteinrichtung (100) oder der maritimen Struktur in Echtzeit unter Verwendung von Vorhersagereaktionsdaten über die Transporteinrichtung (100) oder die maritime Struktur steuert.

8. System nach Anspruch 1, wobei die schwimmende Einrichtung (300) an der Transporteinrichtung (100) arretierbar fixiert ist, oder innerhalb des Fluids (200) von selbst, ohne arretiert zu sein, schwimmt, oder wobei wenigstens einer des ersten schwimmenden Körpers (410) und des zweiten schwimmenden Körpers (420) der Positionsjustierungseinrichtung (400) unregelmäßig angeordnet ist, oder wobei der erste schwimmende Körper (410) der Positionsjustierungseinrichtung (400) ein schwimmendes Element ist, das einen Auftriebskörper aufweist.

9. System nach Anspruch 1, wobei der zweite schwimmende Körper (420) der Positionsjustierungseinrichtung (400) wenigstens eines von einem schwimmenden Element, das einen Auftriebskörper aufweist, und einem Vorhangelement ist, das eine Vorhangform aufweist.

10. System nach Anspruch 5, wobei, wenn eine Vielzahl von Prallplatten (150) in einer Höhenrichtung der Transporteinrichtung (100) angeordnet sind, ein Winkel zwischen einer Oberfläche der Prallplatte (150) und einer Innenwandoberfläche der maritimen Struktur in einer Höhenrichtung der maritimen Struktur voneinander unterschiedlich ist.

11. System nach Anspruch 10, wobei die Prallplatte (150) so ausgebildet ist, dass sie eine von einem Ende zum anderen Ende graduell dünner werdende Dicke aufweist.

12. System nach Anspruch 1, wobei der mit einem oberen Teil der Positionsjustierungseinrichtung (400) verbundene erste schwimmende Körper (410) ein schwimmendes Element ist, das einen Auftriebskörper aufweist, und der mit einem unteren Teil der Positionsjustierungseinrichtung (400) verbundene zweite schwimmende Körper (420) aus einem Vorhangelement (420b) gebildet ist, das aus einem Phenolharz, einem Melaminharz oder einem synthetischen Harz davon ausgebildet ist.

13. System nach Anspruch 1, wobei das Vorhangelement (420b) aus einem Einzelelement, das dazu angeordnet ist, einen Seitenumfang der schwimmenden Einrichtung (300) zu umgeben, oder einer Vielzahl von Elementen gebildet ist, die dazu angeordnet sind, einen Seitenumfang der schwimmenden Einrichtung (300) zu umgeben.

## Revendications

1. Système de contrôle d'une charge d'impact résultant d'un fluide sous une force interne/externe dans un environnement spécifique comprenant :
- un moyen de flottaison (300) placé horizontalement à l'intérieur d'une quantité prédéterminée de fluide (200) se trouvant dans un espace ouvert ou dans un espace muni d'un intérieur étanche,
- un moyen d'ajustement de la position (400) connecté verticalement au moyen de flottaison (300) et placé dans une position prédéterminée à l'intérieur du fluide,
- un moyen de détection (500) installé sélectivement à l'intérieur du fluide (200), sur le moyen de flottaison (300), sur le moyen d'ajustement de la position (400), ou sur une structure placée à la périphérie pour détecter un changement physique d'au moins un objet de mesure prédéterminé, et
- un moyen de contrôle (600) pour prévoir/surveiller et prévoir/contrôler les forces internes/externes de l'environnement liées à la dynamique des fluides, les contraintes de la coque, les mouvements à six degrés de liberté et les positions en connexion avec un moyen de transport (100) ou une structure maritime, sur laquelle le moyen de flottaison (300), le moyen d'ajustement de la position (400) et le moyen de détection (500) sont installés, en utilisant la valeur du changement physique lié à l'objet de mesure transmise par le moyen de détection (500),
- **caractérisé en ce que** le moyen d'ajustement de la position (400) comprend au moins un parmi un premier corps de flottaison (410) placé au niveau d'une partie inférieure du moyen de flottaison (300) et au moins un parmi un deuxième corps de flottaison (420) placé au niveau d'une partie inférieure du moyen de flottaison (300), et
- où le système comprend en outre un élément de connexion (430) connectant le premier corps de flottaison (410) et le deuxième corps de flottaison (420) au moyen de flottaison (300), et
- où le premier corps de flottaison (410) a une pesanteur spécifique inférieure au fluide (200) et au moyen de flottaison (300), le deuxième corps de flottaison (420) a une pesanteur spécifique supérieure à celle du fluide (200) et du moyen de flottaison (300), et le moyen de flottaison (300) a une pesanteur spécifique supérieure à celle du fluide (200) et du premier corps de flottaison (410) et inférieure au deuxième corps de flottaison (420).

2. Système selon la revendication 1, **caractérisé en ce que** le moyen de flottaison (300) comprend au moins un élément de paillet (310) verrouillé l'un à l'autre et chaque élément de paillet (310) comprend une pièce de corps(301) présentant un espace fermé (303) au centre d'une partie interne, un corps flottant (305) placé dans l'espace clos (303) de la pièce de corps (301) et un couvercle (308) entourant une surface externe de la pièce de corps (301) et présentant au moins un élément de verrouillage (307) fixé sur la surface externe à des intervalles prédéterminés.

3. Système selon la revendication 2, **caractérisé en ce que** la pluralité d'éléments de paillet (310) sont placés à des intervalles prédéterminés pour avoir un espace vide prédéterminé, afin de re-collecter le fluide évaporé au niveau d'une partie supérieur de l'élément de paillet (310) dans un état liquide quand le liquide inclus dans le fluide (200) et l'élément de paillet (310) sont vaporisés entre les éléments de paillet (310) par le mouvement d'inertie pendant le déplacement ou où les marques d'identification (317, 319) capables d'identifier une image ou un laser sont formées ou fixées sur une surface supérieure de chaque élément de paillet (310), de façon à permettre au moyen de contrôle (600) de mesurer et déterminer la position et le mouvement à six degrés de liberté de chaque élément de paillet (310).

4. Système selon la revendication 1, **caractérisé en ce que** chaque premier corps de flottaison (410) ou deuxième corps de flottaison (420) comprend une pièce de corps (411) munie d'un espace fermé (412) au centre d'une partie interne, un corps flottant (413) placé dans l'espace fermé (412) de la pièce de corps (411) et un couvercle (416) entourant une surface externe de la pièce de corps (411) et présentant des éléments de verrouillage supérieur et inférieur (417, 418) fixés à la surface supérieure et à la surface inférieure.

5. Système selon la revendication 1, **caractérisé en ce que** pendant le transport du fluide (200) dans un état de stockage en utilisant un moyen de transport fermé (100), une plaque de butée (150) contrôlant le mouvement d'une charge d'impact du fluide (200) est placée dans une paroi interne du moyen de transport (100), et la plaque de butée (150) est installée de manière à être sélectivement contrôlable dans les directions vers le haut, le bas, à droite et à gauche, ou quand le moyen de détection (500) comprend une combinaison sélective d'au moins un parmi un détecteur d'accélération (510), un détecteur d'inertie (520), un détecteur de vibrations (530), un détecteur de sons (540), un détecteur de température (550), un détecteur de pression (560), un détecteur de forme (570) et un détecteur de déformation (580), ou quand le moyen de flottaison (300) comprend un premier élément de paillet (311) placé en un nombre impair de colonnes, le premier élément de paillet (311) et le deuxième élément de paillet (312) sont disposés en croisillons les uns par rapport aux autres et sont façonnés en différentes formes.

6. Système selon la revendication 1, **caractérisé en ce que** le moyen de contrôle (600) comprend :
- une pièce de mesure de détection (610) convertissant un changement physique d'un objet de mesure détecté par le moyen de détection (500) en un signal numérique et émettant le signal numérique,
- une pièce de processeur pour analyser et comparer un algorithme (620) conduisant une interprétation, comparaison et analyse structurelle sur une charge d'impact dans le fluide (200) et une charge d'impact générée dans le moyen de flottaison (300), le moyen d'ajustement de la position (400), le moyen de transport (100) ou la structure maritime en utilisant les données transmises et mesurées au niveau de la pièce de mesure de détection (610),
- une base de données (630) stockant une table de conversion faite en faisant un algorithme du résultat analysé au niveau de la pièce de processeur pour un algorithme d'analyse et de comparaison (620),
- un processeur pour l'algorithme de diagnostic prédictif et de signal de contrôle (640) prédisant les données de charge d'impact sur une réponse du moyen de transport (100) ou la structure maritime en comparant les données mesurées au niveau du moyen de détection (500) avec les données sur la force interne/externe accumulée dans la table de conversion stockée dans la base de données (630), et
- une pièce de surveillance et de contrôle à distance (650) contrôlant à distance l'entraînement d'un dispositif de cible de contrôle dans le moyen de transport (100) en utilisant un algorithme de signal de contrôle prédictif émis par le processeur pour l'algorithme de diagnostic prédictif et de signal de contrôle (650).

7. Système selon la revendication 6, **caractérisé en ce que** le dispositif de cible de contrôle dans le moyen de transport (100) est une combinaison sélective d'un réservoir de lest, un tensionneur, un propulseur et un gouvernail, ou **en ce que** la pièce de surveillance et de contrôle à distance (650) contrôle la position ou le trajet de navigation du moyen de transport (100) ou de la structure maritime en temps réel en utilisant les données de réponses prédites sur le moyen de transport (100) ou la structure maritime.

8. Système selon la revendication 1, **caractérisé en ce que** l'élément de flottaison (300) est fixé de manière verrouillée au moyen de transport (100) ou flotte dans le fluide (200) par lui-même sans être verrouillé ou **en ce qu'**au moins un parmi le premier corps de flottaison (410) et le deuxième corps de flottaison (420) du moyen d'ajustement de la position (400) est placé irrégulièrement ou **en ce que** le premier corps de flottaison (410) du moyen d'ajustement de la position (400) est un élément de flottaison muni d'un corps flottant.

9. Système selon la revendication 1, **caractérisé en ce que** le deuxième corps de flottaison (420) du moyen d'ajustement de la position (400) est au moins parmi un élément de flottaison muni d'un corps flottant et un élément de rideau ayant une forme de rideau.

10. Système selon la revendication 5, **caractérisé en ce qu'**une pluralité de plaques de butée (150) sont disposées dans la direction de la hauteur du moyen de transport (100), un angle entre une surface de la plaque de butée (150) et une surface de paroi interne de la structure maritime les différenciant les unes des autres dans la direction de la hauteur de la structure maritime.

11. Système selon la revendication 10, **caractérisé en ce que** la plaque de butée (150) est formée de manière à avoir une épaisseur graduellement plus réduite d'une extrémité à l'autre.

12. Système selon la revendication 1, **caractérisé en ce que** le premier corps de flottaison (410) connecté à une partie supérieure du moyen d'ajustement de la position (400) est un élément de flottaison muni d'un corps flottant et le deuxième corps de flottaison (420) connecté à une partie inférieure du moyen d'ajustement de la position (400) est formé d'un élément en rideau (420b) formé dans une résine de phénol, une résine de mélamine ou une résine synthétique de celles-ci.

13. Système selon la revendication 1, **caractérisé en ce que** l'élément de rideau (420b) est formé d'un élément unique disposé de manière à entourer une circonférence latérale du moyen de flottaison (300) ou une pluralité d'éléments disposés de manière à entourer une circonférence latérale du moyen de flottaison (300).
